# NEW EUROPEAN PATENT SPECIFICATION

(11) **EP 3 841 166 B2**
(45) Date of publication and mention of the opposition decision: **07.05.2025**
(45) Mention of the grant of the patent: 20.07.2022
(21) Application number: 19765356.1
(22) Date of filing: 19.08.2019
(51) Int. Cl.: C08K 5/3435, C08K 5/372

(54) **STABILIZED ROTOMOLDED POLYOLEFIN**
STABILISIERTES, ROTATIONSGEFORMTES POLYOLEFIN
POLYOLÉFINE ROTOMOULÉE STABILISÉE

(30) Priority: 22.08.2018 US 201862721286 P
(43) Date of publication of application: 30.06.2021
(73) Proprietor: BASF SE, 67056 Ludwigshafen am Rhein (DE)
(72) Inventor: SIGLER, John, Tarrytown, NY 10591 (US)
(74) Representative: Meissner Bolte Partnerschaft mbB
(86) International application number: PCT/US2019/047034
(87) International publication number: WO 2020/041181

(56) References cited:
- EP-A1- 0 839 623
- EP-A1- 3 272 804
- EP-B1- 0 200 684
- WO-A1-2017/013028
- WO-A1-2017/033142
- WO-A2-2012/082578
- CN-A- 102 604 209
- GB-A- 1 001 471
- JP-A- 2003 082 172
- JP-A- 2011 256 293
- JP-A- 2017 020 628
- US-A- 5 260 381
- US-A- 5 367 025
- US-A1- 2004 152 807
- US-A1- 2006 276 571
- US-B1- 6 719 941
- JOACHIM VOIGT: "DIE STABILISIERUNG DER KUNSTSTOFFE GEGEN LICHT UND WÄRME", 1 January 1966, SPRINGER-VERLAG, ISBN: 978-3-642-52097-6, article JOACHIM VOIGT: "7.1.1. Meravptane und Mercaptoallcohole", pages: 331 - 348, XP009555210
- ANNA & GEORGE WYPYCH: "Databook of UV stabilizers", 2015, CHEMTEC PUBLISHING, Toronto, ISBN: 978-1-895198-88-1
- JOHN MURPHY: "Additives for Plastics Handbook, 2nd Edition", 2001, ELSEVIER SCIENCE LTD., ISBN: 1 85617 370 4, article "CHAPTER 8 Modifying Specific Properties: Resistance to Heat - Heat Stabilizers", pages: 93-96

## Description

The disclosure is directed to polyolefin compositions prepared by a rotomolding process having improved mechanical properties.

### Background

Rotational molding (rotomolding) is a manufacturing process in which hollow plastic articles are prepared. In general, a plastic material is filled into one half of a mold which is then closed with the other half. The closed mold is heated and rotated around different axes, wherein molten polymer coats the interior of the mold - a process referred to as "sintering". The mold is then cooled and the molded article removed. The process may require temperatures of greater than about 300°C or even greater than about 400°C.

The rotomolding process may be employed to prepare articles such as storage tanks for water, oil and the like; kayaks, toys, refuse containers, equipment housings, etc. Typically, a rotomolding process employs a polyolefin substrate, for instance polyethylene.

In the rotomolding process, there are typically high processing temperatures and prolonged heating times. Even during the cooling cycle (crystallization) of the polymer, there may be exposure to the deleterious effects of heat. The rotomolded part is typically cooled slowly to avoid distortion and warping and, depending on the part size and thickness, the part may be exposed to a significant amount of heat during the cooling stage. Even after removal from the mold, a plastic part may still be cooling and crystallizing. Prolonged exposure to heat and oxygen have a negative impact on the mechanical properties of a rotomolded plastic part. Current processing stabilization packages do not provide rotomolded parts with the desired mechanical properties, for example impact strength or ductility.

US 2006/276571 A1 discloses polyolefin hollow articles produced by the rotomolding process comprising polyethylene, HALS compounds and also stabilizers such as a hydroxyphenylbenzotriazole or a tris-aryl-s-triazine ultraviolet light absorber, a hindered phenolic antioxidant and an organic phosphorus processing stabilizer.

### Summary

Accordingly, disclosed is a hollow plastic article stabilized against the deleterious effects of heat, light and oxygen, the article comprising a polyolefin substrate, the polyolefin substrate having incorporated therein a hindered amine light stabilizer, an ultraviolet light absorber selected from oxamide ultraviolet light absorbers, and a thioether additive.

Also disclosed is a process for the production of a hollow plastic article, the process comprising incorporating into a polyolefin substrate a hindered amine light stabilizer, an ultraviolet light absorber selected from oxamide ultraviolet light absorbers, and a thioether additive to provide a fully formulated polyolefin mixture, adding the mixture to a mold, heating the mold to a temperature of greater than 280°C, rotating the mold about at least 2 axes, wherein molten polyolefin mixture coats the interior of the mold, cooling the mold while still rotating, opening the mold and removing the formed hollow article.

### Detailed Disclosure

In certain embodiments, a polyolefin substrate comprises a polyethylene. Polyethylene includes, for example, high density polyethylene (HDPE), high molecular weight high density polyethylene (HMW HDPE), ultrahigh molecular weight high density polyethylene (UHMW HDPE), medium density polyethylene (MDPE), low density polyethylene (LDPE), linear low density polyethylene (LLDPE), branched low density polyethylene (BLDPE) or polyethylenes and ethylene copolymers prepared using Phillips catalysts and polyethylene blends. Ethylene copolymers may contain differing proportions of comonomers. In some embodiments, comonomers include 1-olefins such as propene, 1-butene, 1-pentene, 1-hexene, 1-heptene, 1-octene or isobutylene, styrene, cycloolefins such as cyclopentene, cyclohexene or norbornene or dienes such as butadiene, isoprene, 1,4-hexadiene, cyclopentadiene, dicyclopentadiene, norbornadiene or ethylidenenorbornene.

Polyolefin substrates also include polyethylene blends with polyolefins. Examples include mixtures of polyethylene with polypropylene (PP) and mixtures of various PE types, for example mixtures including two or more of high density polyethylene (HDPE), high molecular weight high density polyethylene (HMW HDPE), ultrahigh molecular weight high density polyethylene (UHMW HDPE), medium density polyethylene (MDPE), low density polyethylene (LDPE), linear low density polyethylene (LLDPE), branched low density polyethylene (BLDPE) or ethylene-propylene-diene terpolymers (EPDM) containing high proportions of diene. Certain embodiments of polymer mixtures include, for example, PP/HDPE, PP/LLDPE, and LLDPE/HDPE as well as ternary mixtures such as PP/HDPE/LLDPE. In certain embodiments, polymers can be linear or branched and can be formulated with or without crosslinking (e.g., chemical crosslinking).

The polyolefin substrate may have other polymers incorporated therein, for example polystyrene, polyamide, polyester, polycarbonate, epoxy resins, polyurethane, copolymers thereof (e.g., random or block copolymers) or mixtures thereof. In some embodiments, such "other" polymers may be present in a finished article from any of about 1 wt% (weight percent), about 2 wt%, about 3 wt%, about 4 wt%, about 5 wt%, about 6 wt% or about 7 wt% to any of about 8 wt%, about 9 wt%, about 10 wt%, about 11 wt%, about 12 wt%, about 13 wt%, about 14 wt% or about 15 wt%, based on the total weight of the finished article.

Present hollow articles may in some embodiments comprise a hindered amine light stabilizer from any of about 50 ppm (parts per million), about 100 ppm, about 200 ppm, about 300 ppm, about 400 ppm, about 500 ppm or about 600 ppm to any of about 700 ppm, about 800 ppm, about 900 ppm, about 1000 ppm, about 1100 ppm, about 1200 ppm, about 1300 ppm, about 1400 ppm, about 1500 ppm, about 1600 ppm, about 1700 ppm, about 1800 ppm, about 1900 ppm or about 2000 ppm, by weight, based on the total weight of the article.

In other embodiments, the hollow articles may comprise a hindered amine light stabilizer from any of about 0.1 wt% (weight percent), about 0.2 wt%, about 0.5 wt%, about 1.0 wt%, about 1.5 wt%, about 2.0 wt%, about 2.5 wt% or about 3.0 wt% to any of about 3.5 wt%, about 4.0 wt%, about 4.5 wt%, about 5.0 wt%, about 5.5 wt%, about 6.0 wt%, about 6.5 wt%, about 7.0 wt% or about 7.5 wt%, based on the total weight of the article.

Present hollow articles may in some embodiments comprise an ultraviolet light absorber from any of about 50 ppm (parts per million), about 100 ppm, about 200 ppm, about 300 ppm, about 400 ppm, about 500 ppm or about 600 ppm to any of about 700 ppm, about 800 ppm, about 900 ppm, about 1000 ppm, about 1100 ppm, about 1200 ppm, about 1300 ppm, about 1400 ppm, about 1500 ppm, about 1600 ppm, about 1700 ppm, about 1800 ppm, about 1900 ppm or about 2000 ppm, by weight, based on the total weight of the article.

In other embodiments, the hollow articles may comprise an ultraviolet light absorber from any of about 0.1 wt% (weight percent), about 0.2 wt%, about 0.5 wt%, about 1.0 wt%, about 1.5 wt%, about 2.0 wt%, about 2.5 wt% or about 3.0 wt% to any of about 3.5 wt%, about 4.0 wt%, about 4.5 wt%, about 5.0 wt%, about 5.5 wt%, about 6.0 wt%, about 6.5 wt%, about 7.0 wt% or about 7.5 wt%, based on the total weight of the article.

Present hollow articles may in some embodiments comprise a thioether additive from any of about 50 ppm (parts per million), about 100 ppm, about 200 ppm, about 300 ppm, about 400 ppm, about 500 ppm or about 600 ppm to any of about 700 ppm, about 800 ppm, about 900 ppm, about 1000 ppm, about 1100 ppm, about 1200 ppm, about 1300 ppm, about 1400 ppm, about 1500 ppm, about 1600 ppm, about 1700 ppm, about 1800 ppm, about 1900 ppm or about 2000 ppm, by weight, based on the total weight of the article.

In other embodiments, the hollow articles may comprise a thioether additive from any of about 0.1 wt% (weight percent), about 0.2 wt%, about 0.5 wt%, about 1.0 wt%, about 1.5 wt%, about 2.0 wt%, about 2.5 wt% or about 3.0 wt% to any of about 3.5 wt%, about 4.0 wt%, about 4.5 wt%, about 5.0 wt%, about 5.5 wt%, about 6.0 wt%, about 6.5 wt%, about 7.0 wt% or about 7.5 wt%, based on the total weight of the article.

In certain embodiments, a weight/weight ratio of hindered amine light stabilizer to thioether additive is from any of about 7/1, about 6/1, about 5/1 or about 4/1 to any of about 3/1, about 2/1 or about 1/1.

In some embodiments, a weight/weight ratio of ultraviolet light absorber to thioether additive is from any of about 3/1, about 2/1, about 1.5/1 or about 1/1 to any of about 1/1.5, about 1/2 or about 1/3.

In some embodiments, the hollow articles comprise the polyolefin substrate from any of about 50 wt%, about 55 wt%, about 60 wt%, about 65 wt%, about 70 wt%, about 73 wt%, about 76 wt%, about 79 wt% or about 82 wt% to any of about 85 wt%, about 88 wt%, about 90 wt%, about 93 wt% or about 95 wt%, based on the total weight of the article.

Hindered amine light stabilizers (HALS) are disclosed for example in US2015/0284535 and U.S. Pat. Nos. 5,004,770, 5,204,473, 5,096,950, 5,300,544, 5,112,890, 5,124,378, 5,145,893, 5,216,156, 5,844,026, 5,980,783, 6,046,304, 6,117,995, 6,271,377, 6,297,299, 6,392,041, 6,376,584 and 6,472,456.

Hindered amine light stabilizers include for example:
(1) 1-cyclohexyloxy-2,2,6,6-tetramethyl-4-octadecylaminopiperidine,
(2) bis(2,2,6,6-tetramethylpiperidin-4-yl) sebacate,
(3) bis(1-acetoxy-2,2,6,6-tetramethylpiperidin-4-yl) sebacate,
(4) bis(1,2,2,6,6-pentamethylpiperidin-4-yl) sebacate,
(5) bis(1-cyclohexyloxy-2,2,6,6-tetramethylpiperidin-4-yl) sebacate,
(6) bis(1-octyloxy-2,2,6,6-tetramethylpiperidin-4-yl) sebacate;
(7) bis(1-acyl-2,2,6,6-tetramethylpiperidin-4-yl) sebacate,
(8) bis(1,2,2,6,6-pentamethyl-4-piperidyl) n-butyl-3,5-di-tert-butyl-4-hydroxybenzylmalonate
(9) 2,4-bis[(1-cyclohexyloxy-2,2,6,6-tetramethylpiperidin-4-yl)butylamino]-6-(2-hydroxyethyl amino-s-triazine,
(10) bis(1-cyclohexyloxy-2,2,6,6-tetramethylpiperidin-4-yl) adipate,
(11) 2,4-bis[(1-cyclohexyloxy-2,2,6,6-piperidin-4-yl)butylamino]-6-chloro-s-triazine,
(12) 1-(2-hydroxy-2-methylpropoxy)-4-hydroxy-2,2,6,6-tetramethylpiperidine,
(13) 1-(2-hydroxy-2-methylpropoxy)-4-oxo-2,2,6,6-tetramethylpiperidine,
(14) 1-(2-hydroxy-2-methylpropoxy)-4-octadecanoyloxy-2,2,6,6-tetramethylpiperidine,
(15) bis(1-(2-hydroxy-2-methylpropoxy)-2,2,6,6-tetramethylpiperidin-4-yl) sebacate,
(16) bis(1-(2-hydroxy-2-methylpropoxy)-2,2,6,6-tetramethylpiperidin-4-yl) adipate,
(17) 2,4-bis{N-[1-(2-hydroxy-2-methylpropoxy)-2,2,6,6-tetramethylpiperidin-4-yl]-N-butyl-amino}-6-(2-hydroxyethylamino)-s-triazine,
(18) 4-benzoyl-2,2,6,6-tetramethylpiperidine,
(19) di-(1,2,2,6,6-pentamethylpiperidin-4-yl) p-methoxybenzylidenemalonate,
(20) 2,2,6,6-tetramethylpiperidin-4-yl octadecanoate,
(21) bis(1-octyloxy-2,2,6,6-tetramethylpiperidyl) succinate,
(22) 1,2,2,6,6-pentamethyl-4-aminopiperidine,
(23) 2-undecyl-7,7,9,9-tetramethyl-1-oxa-3,8-diaza-4-oxo-spiro[4,5]decane,
(24) tris(2,2,6,6-tetramethyl-4-piperidyl) nitrilotriacetate,
(25) tris(2-hydroxy-3-(amino-(2,2,6,6-tetramethylpiperidin-4-yl)propyl) nitrilotriacetate,
(26) tetrakis(2,2,6,6-tetramethyl-4-piperidyl)-1,2,3,4-butane-tetracarboxylate,
(27) tetrakis(1,2,2,6,6-pentamethyl-4-piperidyl)-1,2,3,4-butane-tetracarboxylate,
(28) 1,1'-(1,2-ethanediyl)-bis(3,3,5,5-tetramethylpiperazinone),
(29) 3-n-octyl-7,7,9,9-tetramethyl-1,3,8-triazaspiro[4.5]decan-2,4-dione,
(30) 8-acetyl-3-dodecyl-7,7,9,9-tetramethyl-1,3,8-triazaspiro[4.5]decane-2,4-dione,
(31) 3-dodecyl-1-(2,2,6,6-tetramethyl-4-piperidyl)pyrrolidin-2,5-dione,
(32) 3-dodecyl-1-(1,2,2,6,6-pentamethyl-4-piperidyl)pyrrolidine-2,5-dione,
(33) N,N'-bis-formyl-N,N'-bis(2,2,6,6-tetramethyl-4-piperidyl)hexamethylenediamine,
(33a) bis(1-undecanyloxy-2,2,6,6-tetramethylpiperidin-4-yl) carbonate,
(34) reaction product of 2,4-bis[(1-cyclohexyloxy-2,2,6,6-piperidin-4-yl)butylamino]-6-chloro-s-triazine with N,N'-bis(3-aminopropyl)ethylenediamine),
(35) condensate of 1-(2-hydroxyethyl)-2,2,6,6-tetramethyl-4-hydroxypiperidine and succinic acid,
(36) condensate of N,N'-bis(2,2,6,6-tetramethyl-4-piperidyl)-hexamethylenediamine and 4-tert-octylamino-2,6-dichloro-1,3,5-triazine,
(37) condensate of N,N'-bis(2,2,6,6-tetramethyl-4-piperidyl)-hexamethylenediamine and 4-cyclohexylamino-2,6-dichloro-1,3,5-triazine,
(38) condensate of N,N'-bis-(2,2,6,6-tetramethyl-4-piperidyl)hexamethylenediamine and 4-morpholino-2,6-dichloro-1,3,5-triazine,
(39) condensate of N,N'-bis-(1,2,2,6,6-pentamethyl-4-piperidyl)hexamethylenediamine and 4-morpholino-2,6-dichloro-1,3,5-triazine,
(40) condensate of 2-chloro-4,6-bis(4-n-butylamino-2,2,6,6-tetramethylpiperidyl)-1,3,5-triazine and 1,2-bis(3-aminopropylamino)ethane,
(41) condensate of 2-chloro-4,6-di-(4-n-butylamino-1,2,2,6,6-pentamethylpiperidyl)-1,3,5-triazine and 1,2-bis-(3-aminopropylamino)ethane,
(42) a reaction product of 7,7,9,9-tetramethyl-2-cycloundecyl-1-oxa-3,8-diaza-4-oxospiro [4,5]decane and epichlorohydrin,
(43) poly[methyl,(3-oxy-(2,2,6,6-tetramethylpiperidin-4-yl)propyl)] siloxane, CAS#182635-99-0,
(44) reaction product of maleic acid anhydride-C₁₈-C₂₂-a-olefin-copolymer with 2,2,6,6-tetramethyl-4-aminopiperidine,
(45) oligomeric condensate of 4,4'-hexamethylenebis(amino-2,2,6,6-tetramethylpiperidine) and 2,4-dichloro-6-[(2,2,6,6-tetramethylpiperidin-4-yl)butylamino]-s-triazine end-capped with 2-chloro-4,6-bis(dibutylamino)-s-triazine,
(46) oligomeric condensate of 4,4'-hexamethylenebis(amino-1,2,2,6,6-pentaamethyl-piperidine) and 2,4-dichloro-6-[(1,2,2,6,6-pentaamethylpiperidin-4-yl)butylamino]-s-triazine end-capped with 2-chloro-4,6-bis(dibutylamino)-s-triazine,
(47) oligomeric condensate of 4,4'-hexamethylenebis(amino-1-propoxy-2,2,6,6-tetramethyl
   piperidine) and 2,4-dichloro-6-[(1-propoxy-2,2,6,6-tetramethylpiperidin-4-yl)butylamino]-s-triazine end-capped with 2-chloro-4,6-bis(dibutylamino)-s-triazine,
(48) oligomeric condensate of 4,4'-hexamethylenebis(amino-1-acyloxy-2,2,6,6-tetramethyl
   piperidine) and 2,4-dichloro-6-[(1-acyloxy-2,2,6,6-tetramethylpiperidin-4-yl)butylamino]-s-triazine end-capped with 2-chloro-4,6-bis(dibutylamino)-s-triazine and
(49) product obtained by reacting (a) with (b) where (a) is product obtained by reacting 1,2-bis(3-aminopropylamino)ethane with cyanuric chloride and (b) is (2,2,6,6-tetramethyl piperidin-4-yl)butylamine.

Also included are the sterically hindered N-H, N-methyl, N-hydroxy and N-acyloxy analogues of any of the above mentioned compounds. For example, replacing an N-H hindered amine with an N-methyl hindered amine would be employing the N-methyl analogue in place of the N-H.

For illustrative purposes, some of the structures for the above-named compounds are shown below. 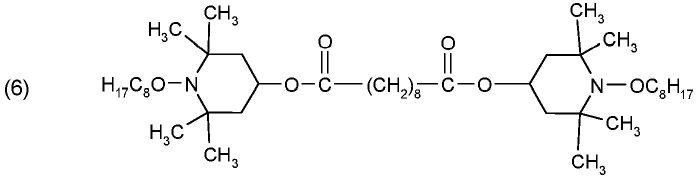 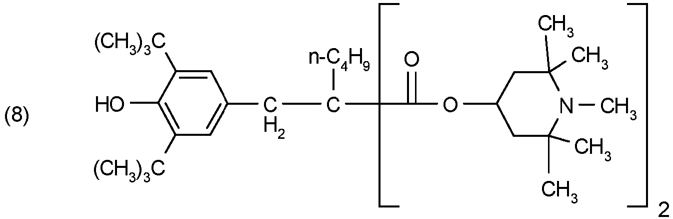 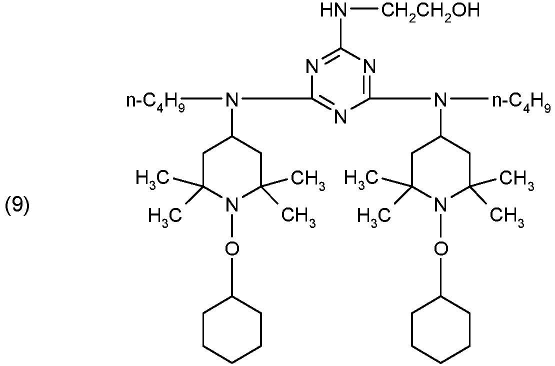 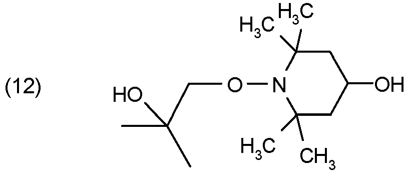 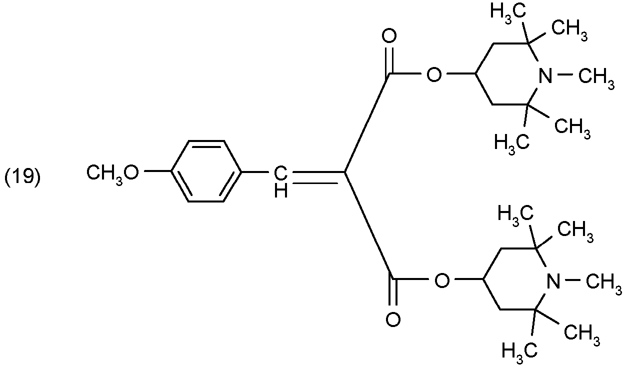 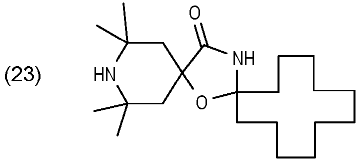 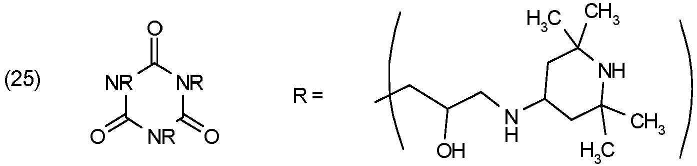 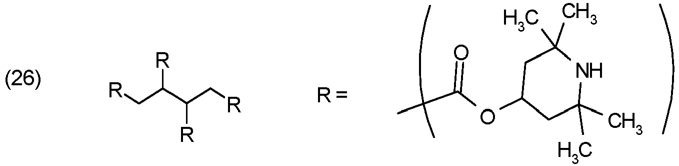 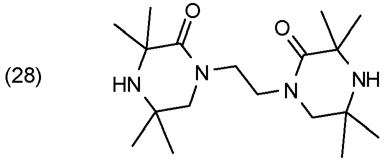 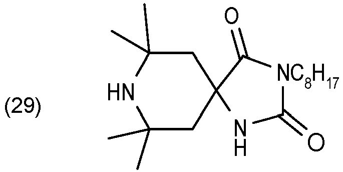 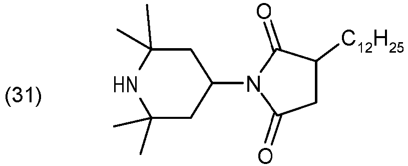 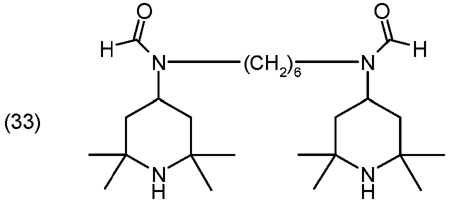 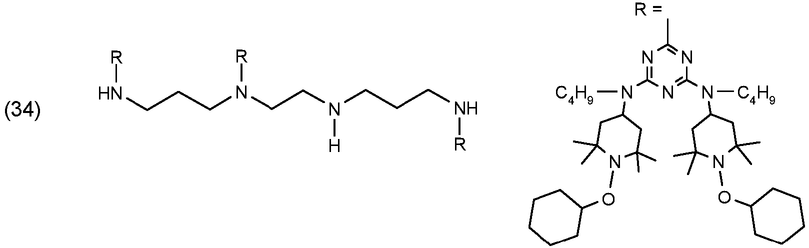 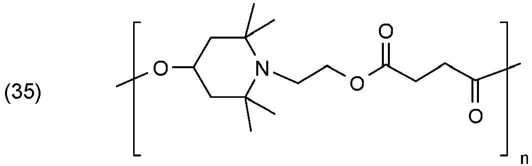 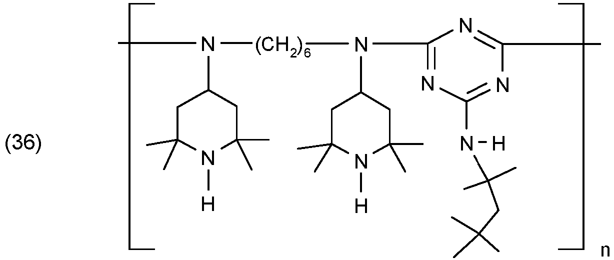 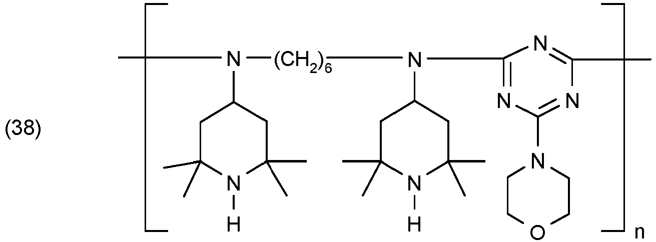 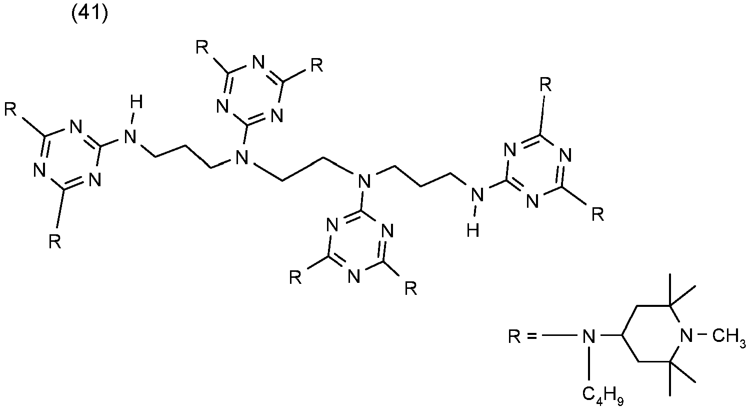 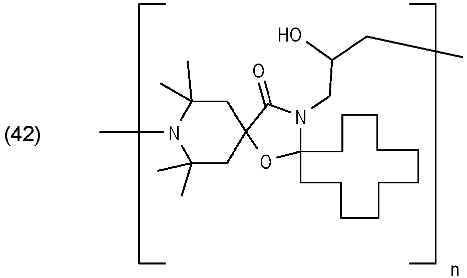 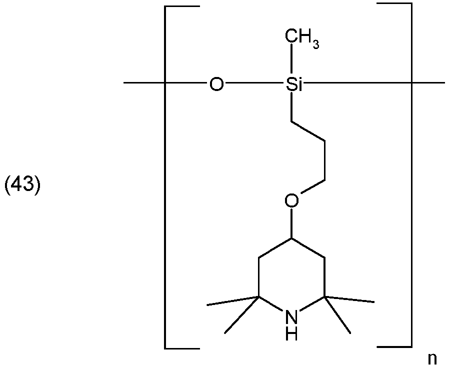 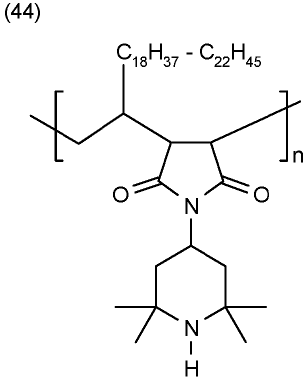 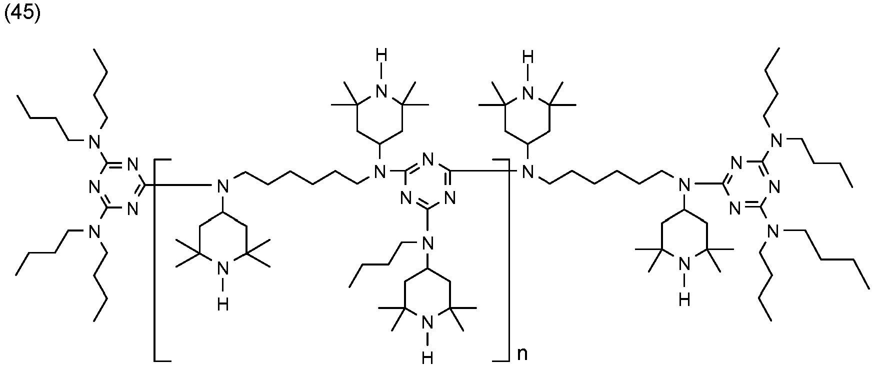 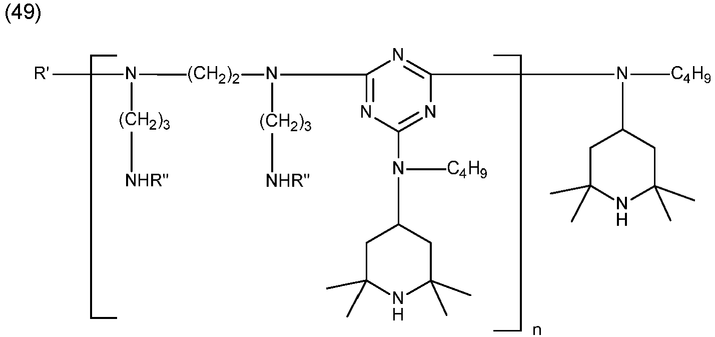
where R' = R" or H
n = 2 or 3
and where R" =

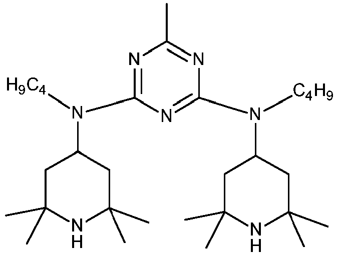

In some embodiments, hindered amine light stabilizers may be selected from a group consisting of
(2) bis(2,2,6,6-tetramethylpiperidin-4-yl) sebacate,
(20) 2,2,6,6-tetramethylpiperidin-4-yl octadecanoate,
(14) 1-(2-hydroxy-2-methylpropoxy)-4-octadecanoyloxy-2,2,6,6-tetramethylpiperidine,
(33) N,N'-bis-formyl-N,N'-bis(2,2,6,6-tetramethyl-4-piperidyl)hexamethylenediamine,
(36) condensate of N,N'-bis(2,2,6,6-tetramethyl-4-piperidyl)-hexamethylenediamine and 4-tert-octylamino-2,6-dichloro-1,3,5-triazine,
(38) condensate of N,N'-bis-(2,2,6,6-tetramethyl-4-piperidyl)hexamethylenediamine and 4-morpholino-2,6-dichloro-1,3,5-triazine,
(39) condensate of N,N'-bis-(1,2,2,6,6-pentamethyl-4-piperidyl)hexamethylenediamine and 4-morpholino-2,6-dichloro-1,3,5-triazine,
(44) reaction product of maleic acid anhydride-C₁₈-C₂₂-□-olefin-copolymer with 2,2,6,6-tetramethyl-4-aminopiperidine,
(45) oligomeric compound condensate of 4,4'-hexamethylenebis(amino-2,2,6,6-tetramethyl piperidine) and 2,4-dichloro-6-[(2,2,6,6-tetramethylpiperidin-4-yl)butylamino]-s-triazine end-capped with 2-chloro-4,6-bis(dibutylamino)-s-triazine,
(47) oligomeric compound condensate of 4,4'-hexamethylenebis(amino-1-propoxy-2,2,6,6-tetramethylpiperidine) and 2,4-dichloro-6-[(1-propoxy-2,2,6,6-tetramethylpiperidin-4-yl)butylamino]-s-triazine end-capped with 2-chloro-4,6-bis(dibutylamino)-s-triazine and binary or ternary combinations thereof.

Certain binary or ternary combinations of hindered amine light stabilizers may be advantageous. For instance, binary or ternary combinations:
(2) bis(2,2,6,6-tetramethylpiperidin-4-yl) sebacate and
(36) condensate of N,N'-bis(2,2,6,6-tetramethyl-4-piperidyl)-hexamethylenediamine and 4-tert-octylamino-2,6-dichloro-1,3,5-triazine;
(2) bis(2,2,6,6-tetramethylpiperidin-4-yl) sebacate and
(45) oligomeric compound condensate of 4,4'-hexamethylenebis(amino-2,2,6,6-tetramethyl piperidine) and 2,4-dichloro-6-[(2,2,6,6-tetramethylpiperidin-4-yl)butylamino]-s-triazine end-capped with 2-chloro-4,6-bis(dibutylamino)-s-triazine;
(20) 2,2,6,6-tetramethylpiperidin-4-yl octadecanoate and
(45) oligomeric condensate of 4,4'-hexamethylenebis(amino-2,2,6,6-tetramethylpiperidine) and
   2,4-dichloro-6-[(2,2,6,6-tetramethylpiperidin-4-yl)butylamino]-s-triazine end-capped with 2-chloro-4,6-bis(dibutylamino)-s-triazine;
(2) bis(2,2,6,6-tetramethylpiperidin-4-yl) sebacate and
(20) 2,2,6,6-tetramethylpiperidin-4-yl octadecanoate; or
(2) bis(2,2,6,6-tetramethylpiperidin-4-yl) sebacate,
(14) 1-(2-hydroxy-2-methylpropoxy)-4-octadecanoyloxy-2,2,6,6-tetramethylpiperidine and (36) condensate of N,N'-bis(2,2,6,6-tetramethyl-4-piperidyl)-hexamethylenediamine and 4-tert-octylamino-2,6-dichloro-1,3,5-triazine.

In some embodiments, HALS (38) or (39) may be substituted for HALS (36) in the binary and ternary combinations.

Many of the present hindered amine stabilizers are commercial, for example TINUVIN 770, CHIMASSORB 944, CHIMASSORB 2020, CYASORB UV 3853, CYASORB UV 3529, TINUVIN NOR 371, UVINUL 4050, UVINUL 5050, etc.

In the binary HALS combinations, the weight/weight ratio is from any of about 1/19, about 1/18, about 1/17, about 1/16, about 1/15, about 1/14, about 1/13, about 1/12, about 1/11, about 1/10, about 1/9, about 1/8, about 1/7, about 1/6, about 1/5, about 1/4, about 1/3, about 1/2 or about 1/1 to any of about 1/2, about 1/3, about 1/4, about 1/5, about 1/6, about 1/7, about 1/8, about 1/9, about 1/10, about 1/11, about 1/12, about 1/13, about 1/14, about 1/15, about 1/16, about 1/17, about 1/18, about 1/19 or about 1/20.

In ternary HALS combinations, a weight/weight ratios of any two of the HALS is as for the binary combinations.

In some embodiments, a combination of a low molecular weight and a high molecular weight HALS may be employed. The low molecular weight stabilizers have a molecular weight of from about 200 g/mol to about 1000 g/mol. The high molecular weight stabilizers have a molecular weight from about 1200 g/mol to about 10,000 g/mol.

Some low molecular weight hindered amines are (1)-(33a). Some high molecular weight hindered amines are (34)-(49). In oligomeric or polymeric hindered amines, the repeating unit "n" is a value such that the average molecular weight is from about 1200 g/mol to about 10,000 g/mol.

The ultraviolet (UV) light absorbers are selected from oxamide ultraviolet light absorbers (UVAs).

Oxamide UVAs include for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide (N'-(2-ethoxyphenyl)-N-(2-ethylphenyl)oxamide), N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.

Further disclosed herein are hydroxyphenylbenzotriazole UVAs, as for instance disclosed in U.S. Pat. Nos. 3,004,896; 3,055,896; 3,072,585; 3,074,910; 3,189,615; 3,218,332; 3,230,194; 4,127,586; 4,226,763; 4,275,004; 4,278,589; 4,315,848; 4,347,180; 4,383,863; 4,675,352;4,681,905, 4,853,471; 5,268,450; 5,278,314; 5,280,124; 5,319,091; 5,410,071; 5,436,349; 5,516,914; 5,554,760; 5,563,242; 5,574,166; 5,607,987, 5,977,219 and 6,166,218, such as 2-(2-hydroxy-5-methylphenyl)-2H-benzotriazole, 2-(3,5-dit-butyl-2-hydroxyphenyl)-2H-benzotriazole, 2-(2-hydroxy-5-t-butylphenyl)-2H-benzotriazole, 2-(2-hydroxy-5-t-octylphenyl)-2H-benzotriazole, 5-chloro-2-(3,5-di-t-butyl-2-hydroxyphenyl)-2H-benzotriazole, 5-chloro-2-(3-t-butyl-2-hydroxy-5-methylphenyl)-2H-benzotriazole, 2-(3-sec-butyl-5-t-butyl-2-hydroxyphenyl)-2H-benzotriazole, 2-(2-hydroxy-4-octyloxyphenyl)-2H-benzotriazole, 2-(3,5-di-t-amyl-2-hydroxyphenyl)-2H-benzotriazole, 2-(3,5-bis-α-cumyl-2-hydroxyphenyl)-2H-benzotriazole, 2-(3-t-butyl-2-hydroxy-5-(2-(ω-hydroxy-octa-(ethyleneoxy)carbonyl-ethyl)-, phenyl)-2H-benzotriazole, 2-(3-dodecyl-2-hydroxy-5-methylphenyl)-2H-benzotriazole, 2-(3-t-butyl-2-hydroxy-5-(2-octyloxycarbonyl)ethylphenyl)-2H-benzotriazole, dodecylated 2-(2-hydroxy-5-methylphenyl)-2H-benzotriazole, 2-(3-t-butyl-2-hydroxy-5-(2-octyloxycarbonylethyl)phenyl)-5-chloro-2H-benzotriazole, 2-(3-tert-butyl-5-(2-(2-ethylhexyloxy)-carbonylethyl)-2-hydroxyphenyl)-5-chloro-2H-benzotriazole, 2-(3-t-butyl-2-hydroxy-5-(2-methoxycarbonylethyl)phenyl)-5-chloro-2H-benzotriazole, 2-(3-t-butyl-2-hydroxy-5-(2-methoxycarbonylethyl)phenyl)-2H-benzotriazole, 2-(3-t-butyl-5-(2-(2-ethylhexyloxy)carbonylethyl)-2-hydroxyphenyl)-2H-benzotriazole, 2-(3-t-butyl-2-hydroxy-5-(2-isooctyloxycarbonylethyl)phenyl-2H-benzotriazole, 2,2'-methylene-bis(4-t-octyl-(6-2H-benzotriazol-2-yl)phenol), 2-(2-hydroxy-3-α-cumyl-5-t-octylphenyl)-2H-benzotriazole, 2-(2-hydroxy-3-t-octyl-5-α-cumylphenyl)-2H-benzotriazole, 5-fluoro-2-(2-hydroxy-3,5-di-□-cumylphenyl)-2H-benzotriazole, 5-chloro-2-(2-hydroxy-3,5-di-a-cumylphenyl)-2H-benzotriazole, 5-chloro-2-(2-hydroxy-3-α-cumyl-5-t-octylphenyl)-2H-benzotriazole, 2-(3-t-butyl-2-hydroxy-5-(2-isooctyloxycarbonylethyl)phenyl)-5-chloro-2H-benzotriazole, 5-trifluoromethyl-2-(2-hydroxy-3-α-cumyl-5-t-octylphenyl)-2H-benzotriazole, 5-trifluoromethyl-2-(2-hydroxy-5-t-octylphenyl)-2H-benzotriazole, 5-trifluoromethyl-2-(2-hydroxy-3,5-di-t-octylphenyl)-2H-benzotriazole, methyl 3-(5-trifluoromethyl-2H-benzotriazol-2-yl)-5-t-butyl-4-hydroxyhydrocinnamate, 5-butylsulfonyl-2-(2-hydroxy-3-a-cumyl-5-t-octylphenyl)-2H-benzotriazole, 5-trifluoromethyl-2-(2-hydroxy-3-a-cumyl-5-t-butylphenyl)-2H-benzotriazole, 5-trifluoromethyl-2-(2-hydroxy-3,5-di-t-butylphenyl)-2H-benzotriazole, 5-trifluoromethyl-2-(2-hydroxy-3,5-di-□-cumylphenyl)-2H-benzotriazole, 5-butylsulfonyl-2-(2-hydroxy-3,5-di-t-butylphenyl)-2H-benzotriazole and 5-phenylsulfonyl-2-(2-hydroxy-3,5-di-t-butylphenyl)-2H-benzotriazole.

Further disclosed herein are tris-aryl-s-triazine UVAs, for instance those disclosed in U. S. Pat. Nos. 3,843,371; 4,619,956; 4,740,542; 5,096,489; 5,106,891; 5,298,067; 5,300,414; 5,354,794; 5,461,151; 5,476,937; 5,489,503; 5,543,518; 5,556,973; 5,597,854; 5,681,955; 5,726,309; 5,736,597; 5,942,626; 5,959,008; 5,998,116; 6,013,704; 6,060,543; 6,242,598 and 6,255,483, for example 4,6-bis-(2,4-dimethylphenyl)-2-(2-hydroxy-4-octyloxyphenyl)-s-triazine, CYASORB 1164, 4,6-bis-(2,4-dimethylphenyl)-2-(2,4-dihydroxyphenyl)-s-triazine, 2,4-bis(2,4-dihydroxyphenyl)-6-(4-chlorophenyl)-s-triazine, 2,4-bis[2-hydroxy-4-(2-hydroxyethoxy)phenyl]-6-(4-chlorophenyl)-s-triazine, 2,4-bis[2-hydroxy-4-(2-hydroxy-4-(2-hydroxyethoxy)phenyl]-6-(2,4-dimethylphenyl)-s-triazine, 2,4-bis[2-hydroxy-4-(2-hydroxyethoxy)phenyl]-6-(4-bromophenyl)-s-triazine, 2,4-bis[2-hydroxy-4-(2-acetoxyethoxy)phenyl]-6-(4-chlorophenyl)-s-triazine, 2,4-bis(2,4-dihydroxyphenyl)-6-(2,4-dimethylphenyl)-s-triazine, 2,4-bis(4-biphenylyl)-6-(2-hydroxy-4-octyloxycarbonylethylidene-oxyphenyl)-s-triazine, 2-phenyl-4-[2-hydroxy-4-(3-sec-butyloxy-2-hydroxypropyloxy)phenyl]-6-[2-hydroxy-4-(3-sec-amyloxy-2-hydroxypropyloxy)phenyl]-s-triazine, 2,4-bis(2,4-dimethylphenyl)-6-[2-hydroxy-4-(3-benzyloxy-2-hydroxypropyloxy)phenyl]-s-triazine, 2,4-bis(2-hydroxy-4-n-butyloxyphenyl)-6-(2,4-di-n-butyloxyphenyl)-s-triazine, 2,4-bis(2,4-dimethylphenyl)-6-[2-hydroxy-4-(3-nonyloxy*-2-hydroxypropyloxy)-5-a-cumylphenyl]-s-triazine (* denotes a mixture of octyloxy, nonyloxy and decyloxy groups), methylenebis-{2,4-bis(2,4-dimethylphenyl)-6-[2-hydroxy-4-(3-butyloxy-2-hydroxypropoxy)phenyl]-s-triazine}, methylene bridged dimer mixture bridged in the 3:5', 5:5' and 3:3' positions in a 5:4:1 ratio, 2,4,6-tris(2-hydroxy-4-isooctyloxycarbonylisopropylideneoxyphenyl)-s-triazine, 2,4-bis(2,4-dimethylphenyl)-6-(2-hydroxy-4-hexyloxy-5-a-cumylphenyl)-s-triazine, 2-(2,4,6-trimethylphenyl)-4,6-bis[2-hydroxy-4-(3-butyloxy-2-hydroxypropyloxy)phenyl]-s-triazine, 2,4,6-tris[2-hydroxy-4-(3-sec-butyloxy-2-hydroxypropyloxy)phenyl]-s-triazine, mixture of 4,6-bis-(2,4-dimethylphenyl)-2-(2-hydroxy-4-(3-dodecyloxy-2-hydroxypropoxy)-phenyl)-s-triazine and 4,6-bis-(2,4-dimethylphenyl)-2-(2-hydroxy-4-(3-tridecyloxy-2-hydroxypropoxy)-phenyl)-s-triazine, TINUVIN 400, 4,6-bis-(2,4-dimethylphenyl)-2-(2-hydroxy-4-(3-(2-ethylhexyloxy)-2-hydroxypropoxy)-phenyl)-s-triazine and 4,6-diphenyl-2-(4-hexyloxy-2-hydroxyphenyl)-s-triazine.

Further disclosed herein are hydroxybenzoate UV absorbers, for instance esters of substituted and unsubstituted benzoic acids, as for example 4-tert-butylphenyl salicylate, phenyl salicylate, octylphenyl salicylate, dibenzoyl resorcinol, bis(4-tert-butylbenzoyl) resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

Further disclosed herein are 2-hydroxybenzophenone UV absorbers, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

Further disclosed herein are cyanoacrylate UV absorbers, for instance pentaerythritol tetrakis(2-cyano-3,3-diphenylacrylate), α-cyano-β,β-diphenylacylic acid ethyl ester or isooctyl ester and α-cyano-β-methyl-p-methoxy-cinnamic acid methyl ester or butyl ester.

Many of the UVAs are commercial, for example TINUVIN 326, TINUVIN 234, TINUVIN 1577, TINUVIN 1600, CYASORB UV 1164, CYASORB THT, CYASORB UV 2908, CHIMASSORB 81, UVINUL 3030, etc.

Thioether additives include for example mercaptan-containing compounds or disulfide-containing compounds. In some embodiments, mercaptan-containing compounds contain one or more, for instance 1, 2, 3 or 4 moieties of formula

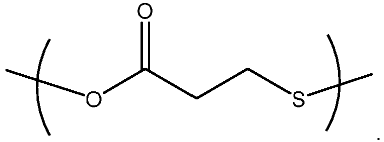

In some embodiments, mercaptan-containing compounds contain one or more, for instance 1, 2, 3 or 4 moieties of formula 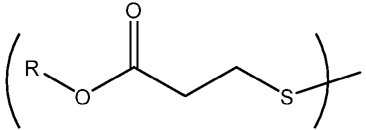 or 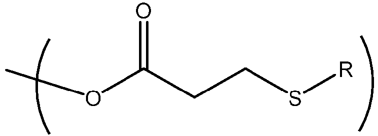 wherein R is a hydrocarbyl group.

For example, in some embodiments, thioether additives include compounds of formula 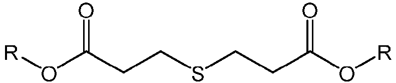 or 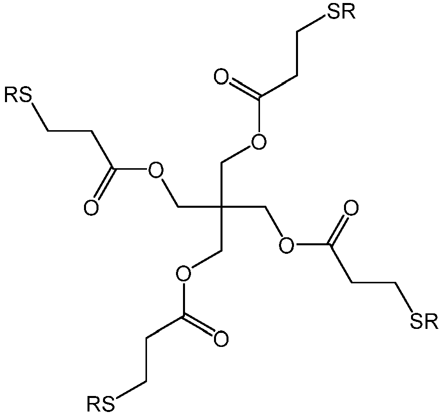 wherein each R is independently a hydrocarbyl group.

Disulfide-containing compounds are of formula R-S-S-R, wherein each R is independently a hydrocarbyl group.

The phrase "each R is independently a hydrocarbyl group" means each R may be the same as, or different than, any other R group.

In some embodiments, thioether additives include dilauryl thiodipropionate, distearyl thiodipropionate, pentaerythritol tetrakis(β-laurylthiopropionate), distearyl disulfide or dilauryl disulfide.

In some embodiments, a hydrocarbyl group may be a C₂-C₄₀ hydrocarbyl group, a C₂-C₂₄ hydrocarbyl group, or a C₂-C₅ hydrocarbyl group. Hydrocarbyl is any hydrocarbon containing group, for example straight or branched chain alkyl or alkenyl which may be interrupted by or substituted by one or more heteroatom-containing groups or aryl groups, for instance interrupted by one or more -O-, -NH- or-C(O)O- groups and/or substituted by one or more hydroxyl, carboxylic, amino, thiol, phosphonate or aryl groups. Aryl includes phenyl.

In some embodiments, hydrocarbyl may be nonyl, decyl, undecyl, 1-methylundecyl, lauryl (dodecyl), tridecyl or stearyl (octadecyl).

Alkyl groups may be linear or branched and may include methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, tert-octyl, 2-ethylhexyl, 1,1,3-trimethylhexyl, 1,1,3,3-tetramethylpentyl, nonyl, decyl, undecyl, 1-methylundecyl, dodecyl and octadecyl. Alkenyl is alkyl containing an ethylenically unsaturated group.

In some embodiments, one or more further additives may be incorporated into the hollow articles of the invention. Further additives may be selected from a group consisting of antioxidants and acid scavengers.

Antioxidants may be selected from a group consisting of hindered phenolic antioxidants, organophosphorus stabilizers, dialkylhydroxylamine stabilizers, amine oxide stabilizers and tocopherols. In some embodiments, antioxidants include a combination of an organophosphorus stabilizer and a hindered phenolic antioxidant, a dialkylhydroxylamine stabilizer, a combination of an organophosphorus stabilizer and a dialkylhydroxylamine stabilizer, an amine oxide stabilizer or a combination of an organophosphorus stabilizer and an amine oxide stabilizer.

Antioxidants also include vitamin E and vitamin E acetate (tocopherols). Each may be employed alone, in combination with each other or in combination with one or more antioxidants selected from the group consisting of hindered phenolic antioxidants, dialkylhydroxylamine stabilizers, organophosphorus stabilizers and amine oxide stabilizers.

Organophosphorus stabilizers are for example known phosphite and phosphonite stabilizers and include triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, bis(2,4-di-α-cumylphenyl) pentaerythrtitol diphosphite, diisodecyl pentaerythritol diphosphite, bis(2,4-di-tert-butylphenyl) pentaerythritol diphosphite (D), bis(2,6-di-tert-butyl-4-methylphenyl) pentaerythritol diphosphite (E), bisisodecyloxy-pentaerythritol diphosphite, bis(2,4-di-tert-butyl-6-methylphenyl) pentaerythritol diphosphite, bis(2,4,6-tri-tert-butylphenyl) pentaerythritol diphosphite, tristearyl sorbitol triphosphite, tetrakis (2,4-di-tert-butylphenyl) 4,4'-biphenylene-diphosphonite (H), 6-isooctyloxy-2,4,8,10-tetra-tert-butyl-dibenzo[d,f][1,3,2]dioxaphosphepin (C), 6-fluoro-2,4,8,10-tetra-tert-butyl-12-methyl-dibenzo[d,g][1,3,2]dioxaphosphocin (A), bis(2,4-di-tert-butyl-6-methylphenyl) methyl phosphite, bis(2,4-di-tert-butyl-6-methylphenyl) ethyl phosphite (G), 2,2',2"-nitrilo[triethyltris(3,3'5,5'-tetra-tert-butyl-1,1'-biphenyl-2,2'-diyl) phosphite] (B), bis(2,4-di-t-butylphenyl) octylphosphite, poly(4,4'- {2,2'-dimethyl-5,5'-di-t-butylphenylsulfide-}octylphosphite), poly(4,4'{-isopropylidenediphenol}-octylphosphite), poly(4,4'-{isopropylidenebis[2,6-dibromophenol]}-octylphosphite), poly(4,4'- {2,2'-dimethyl-5,5'-di-t-butylphenylsulfide}-pentaerythrityl diphosphite), 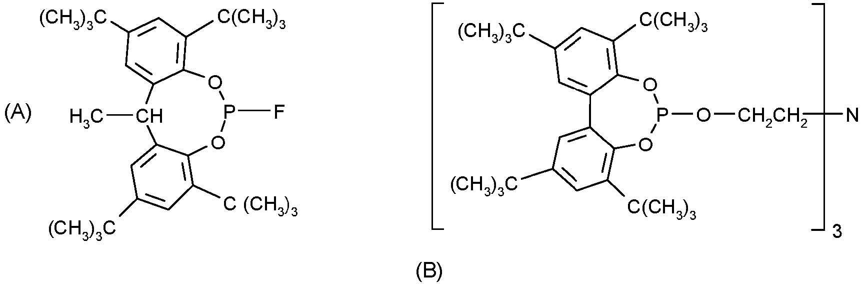 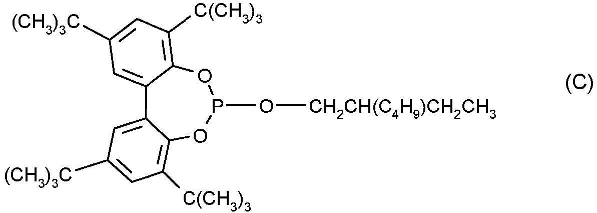 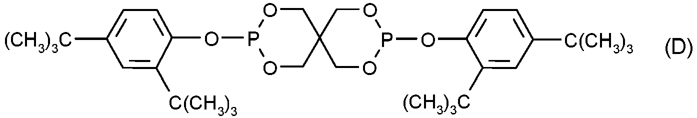 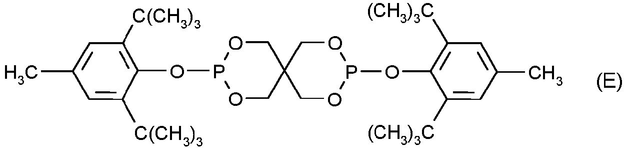 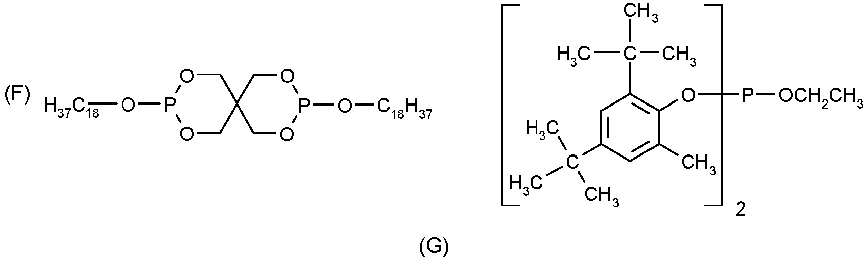 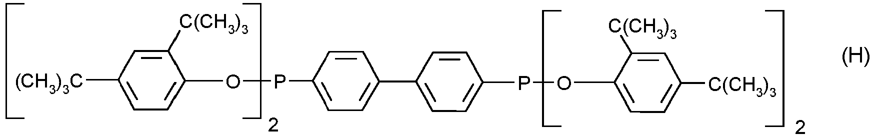 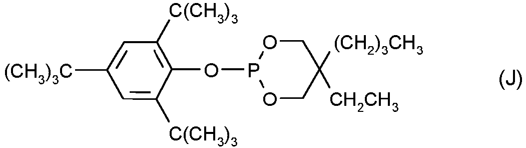 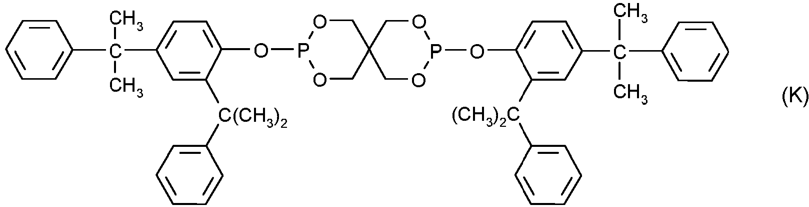 and

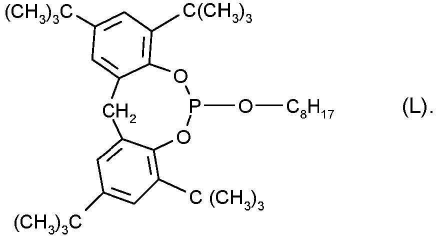

Suitable organophosphorus stabilizers are also liquid stabilizers as disclosed in U.S. Pub. No. 2010/048782 and U.S. Pat. No. 7,888,414, for example liquid phosphites P-2, P-3 and P-4 therein. Suitable liquid organophosphorus stabilizers are also disclosed in U.S. Pub. Nos. 2013/0225736 and 2010/0029844 and U.S. Pat. Nos. 7,468,410 and 8,304,477.

Hindered phenolic antioxidants include for example tris(3,5-di-tert-butyl-4-hydroxybenzyl) isocyanurate, 1,3,5-tris-(3,5-di-tert-butyl-4-hydroxybenzyl)-2,4,6-trimethylbenzene, the calcium salt of the monoethyl ester of 3,5-di-tert-butyl-4-hydroxybenzylphosphonic acid, pentaerythritol tetrakis [3-(3,5-di-tert-butyl-4-hydroxyphenyl) propionate] or octadecyl 3-(3,5-di-tert-butyl-4-hydroxyphenyl) propionate.

A combination of an organophosphorus stabilizer and a hindered phenolic antioxidant may be tris(2,4-di-tert-butylphenyl) phosphite and pentaerythritol tetrakis [3-(3,5-di-tert-butyl-4-hydroxyphenyl) propionate] or octadecyl 3-(3,5-di-tert-butyl-4-hydroxyphenyl) propionate.

A weight/weight ratio of organophosphorus stabilizer to hindered phenolic antioxidant may be from any of about 9/1, about 8/1, about 7/1, about 6/1, about 5/1, about 4/1, about 3/1, about 2/1 or about 1/1 to any of about 1/2, about 1/3, about 1/4, about 1/5, about 1/6, about 1/7, about 1/8 or about 1/9.

Hydroxylamine stabilizers are for example N,N-dibenzylhydroxylamine, N,N-diethylhydroxylamine, N,N-dioc-tylhydroxylamine, N,N-dilaurylhydroxylamine, N,N-didodecylhydroxylamine, N,N-ditetradecylhydroxylamine, N,N-dihexadecylhydroxylamine, N,N-dioctadecylhydroxylamine, N-hexadecyl-N-tetradecylhydroxylamine, N-hexadecyl-N-heptadecylhydroxylamine, N-hexadecyl-N-octadecylhydroxylamine, N-heptadecyl-N-octadecylhydroxylamine, N-methyl-N-octadecylhydroxylamine or N,N-di(C₁₆-C₁₈alkyl)hydroxylamine

The amine oxide stabilizer is for instance a di(C₁₆-C₁₈)alkyl methyl amine oxide, CAS# 204933-93-7.

A combination of an organophosphorus stabilizer and a dialkylhydroxylamine is for example tris(2,4-di-tert-butylphenyl) phosphite and N,N-di(C₁₆-C₁₈alkyl)hydroxylamine

A combination of an organophosphorus stabilizer and an amine oxide stabilizer is for example tris(2,4-di-tert-butylphenyl) phosphite and di(C₁₆-C₁₈)alkyl methyl amine oxide.

A weight/weight ratio of these combinations may be from any of about 9/1, about 8/1, about 7/1, about 6/1, about 5/1, about 4/1, about 3/1, about 2/1 or about 1/1 to any of about 1/2, about 1/3, about 1/4, about 1/5, about 1/6, about 1/7, about 1/8 or about 1/9.

Antioxidants may be present, in total, from any of about 0.05 wt%, about 0.10 wt%, about 0.20 wt%, about 0.30 wt%, about 0.40 wt%, about 0.50 wt% or about 0.60 wt% to any of about 0.70 wt%, about 0.80 wt%, about 0.90 wt%, about 1.0 wt%, about 1.5 wt% or about 2.0 wt%, based on the total weight of the hollow article.

Acid scavengers include hydrotalcites and amorphous basic aluminum magnesium carbonates, such as those described in U.S. Pat. Nos. 4,427,816, 5,106,898 and 5,234,981. Hydrotalcite is also known as hycite, DHT4A, DHT4V, DHT4Z, DHT4A2 or DHT4C. Hydrotalcites are natural or synthetic and may include a coating. Natural hydrotalcite is held to possess a structure Mg₆Al₂(OH)₁₆CO_{3.4} H₂O. A typical empirical formula of a synthetic hydrotalcite is Al₂Mg_{4.35}OH_{11.36}CO_{3(1.67}).x H₂O. Examples of the synthetic product include Mg_{0.7}Al_{0.3}(OH)₂(CO₃)_{0.15}0.54 H₂O, Mg_{4.5}Al₂(OH)₁₃CO₃.3.5 H₂O and Mg_{4.2}Al(OH)_{12.4}CO₃·

In some embodiments, acid scavengers include metal salts of fatty acids, for example alkali or alkali earth metal salts of fatty acids. In some embodiments, acid scavengers include calcium, magnesium, zinc, sodium, potassium or aluminum salts of fatty acids. In some embodiments, acid scavengers include calcium, magnesium, zinc, sodium, potassium or aluminum stearate, behenate, ricinoleate or palmitate. In certain embodiments, acid scavengers include calcium stearate, zinc stearate, magnesium behenate, magnesium stearate, sodium ricinoleate and potassium palmitate. In other embodiments, acid scavengers include zinc oxide.

In some embodiments, a combination of one or more acid scavengers may be employed.

Acid scavengers may be present, in total, from any of about 50 ppm (parts per million), about 100 ppm, about 200 ppm, about 300 ppm, about 400 ppm, about 500 ppm or about 600 ppm to any of about 700 ppm, about 800 ppm, about 900 ppm, about 1000 ppm, about 1100 ppm, about 1200 ppm, about 1300 ppm, about 1400 ppm, about 1500 ppm, about 1600 ppm, about 1700 ppm, about 1800 ppm, about 1900 ppm or about 2000 ppm, based on the total weight of the article.

In other embodiments, the hollow articles may comprise acid scavengers from any of about 0.1 wt% (weight percent), about 0.2 wt% or about 0.5 wt% to any of about 1.0 wt%, about 1.5 wt%, about 2.0 wt%, about 2.5 wt% or about 3.0 wt%, based on the total weight of the article.

Colorants, pigments or fillers may also be added to the present polyolefin substrates.

Pigments include inorganic pigments, such as titanium dioxide in its three crystalline forms: rutile, anatase, or brookite, ultramarine blue, iron oxides, bismuth vanadates, carbon black, effect pigments including metallic pigments such as aluminum flake and pearlescent pigments such as micas, and organic pigments, for example phthalocyanines, perylenes, azo compounds, isoindolines, quinophthalones, diketopyrrolopyrroles, quinacridones, dioxazines, and indan-thrones. Pigments may be included singly or in any combination in amounts typically of up to about 5% by weight, based on the total weight of the article. Dyes are any of the colorants which dissolve completely in the plastic used or are present in molecularly dispersed form and therefore can be used to provide high-transparency, non-diffusion coloring of polymers. Other dyes are organic compounds which fluoresce in the visible portion of the electromagnetic spectrum, e.g. fluorescent dyes. Dyes may be included singly or in any combination in amounts typically of up to about 5% by weight, based on the total weight of the article.

Particulate fillers may be present in an amount from any of about 0.01 wt%, about 0.1 wt%, about 1 wt%, about 5 wt%, about 10 wt%, about 15 wt% or about 20 wt% to any of about 25 wt%, about 30 wt%, about 35 wt%, about 40 wt%, about 45 wt% or about 50 wt%, based on the total weight of the article. Fillers include but are not limited to titanium dioxide, silicon carbide, silica (and other oxides of silica, precipitated or not), antimony oxide, lead carbonate, zinc white, lithopone, zircon, corundum, spinel, apatite, barytes powder, barium sulfate, carbon black, dolomite, calcium carbonate, talc and hydrotalcite compounds of the ions Mg, Ca, or Zn with Al, Cr or Fe and CO₃ and/or HPO₄, hydrated or not; quartz powder, hydrochloric magnesium carbonate, glass fibers, clays, alumina, and other metal oxides and carbonates, metal hydroxides, chrome, phosphorous, antimony trioxide, silica, silicone, and blends thereof. These fillers may include any other fillers and porous fillers and supports known in the art.

Still further additives may be incorporated into the polyolefin substrate, for instance additives such as anti-static agents (antistats), antiscratch additives, slip agents, polymer processing aids, etc. (see Plastic Additives Handbook; 6^{th} Edition). Included are metal salts of fatty acids, for example, calcium, magnesium, zinc, or aluminum stearate. Further additives also include thioether additives, for example dilauryl thiodipropionate or distearyl thiodipropionate.

Further additives also include benzofuranone stabilizers, for example those disclosed in U.S. Pat. Nos. 4,325,863, 4,338,244, 5,175,312, 5,216,052, 5,252,643, 5,369,159, 5,356,966, 5,367,008, 5,428,177 or 5,428,162 or U.S. Patent App. Pub. No. 2012/0238677, including 3-[4-(2-acetoxyethoxy)phenyl]-5,7-di-tert-butyl-benzofuran-2-one, 5,7-di-tert-butyl-3-[4-(2- stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butyl-benzofuran-2-one, 3-(3,5-dimethyl-4-pivaloyloxyphenyl)-5,7-di-tert-butyl-benzofuran-2-one, 3-(3,4-dimethylphenyl)-5,7-di-tert-butyl-benzofuran-2-one, 3-(2-acetyl-5-isooctylphenyl)-5-isooctylbenzofuran-2-one and 3-(2,3-dimethylphenyl)-5,7-di-tert-butyl-benzofuran-2-one. Further additives also include compatibilizers or dispersing aids, for example, maleic anhydride grafted PE or PP, poly(ethylene-co-vinyl acetate), poly(ethylene-acrylic acid), etc. The further additives may be present from any of about 0.05 wt%, about 0.1 wt%, 0.2 wt%, about 0.5 wt%, about 0.7 wt% or about 1.0 wt% to any of about 1.5 wt%, about 2.0 wt%, about 2.5 wt%, about 3.0 wt%, about 3.5 wt%, about 4.0 wt%, about 4.5 wt% or about 5.0 wt%, based on a total weight of the article.

Rotomolding (rotational molding) is used for the production of fairly large plastic hollow articles which may be reinforced with glass fibers. The process includes filling one half of a mold with the plastic material. The mold is then closed with the other half and heated and rotated in an oven such that the molten plastic spreads to the walls of the mold while being rotated around different axes. The hollow article is obtained after cooling. In this manner it is possible to produce, for example, storage tanks from HD polyethylene. In some embodiments, the process requires heating a polyolefin mixture to temperatures in the range of from any of about 170°C, about 190°C, about 210°C, about 215°C, about 220°C, about 230°C, about 240°C, about 260°C or about 280°C to any of about 300°C, about 340°C to about 370°C or about 400°C or higher. These temperatures represent the peak internal air temperature (PIAT) of an oven.

In some embodiments, a 125 mil thick, 5 inch x 5 inch test sample of a present hollow article may exhibit an impact strength of ≥ 21 ft/lbs (foot/pounds), ≥ 23 ft/lbs, ≥ 25 ft/lbs, ≥ 27 ft/lbs, ≥ 29 ft/lbs, ≥ 31 ft/lbs, ≥ 33 ft/lbs, ≥ 35 ft/lbs, ≥ 37 ft/lbs, ≥ 39 ft/lbs, ≥ 40 ft/lbs, ≥ 41 ft/lbs, ≥ 42 ft/lbs or ≥ 43 ft/lbs.

In certain embodiments, a 125 mil thick, 5 inch x 5 inch test sample of a present hollow article may exhibit a ductility of ≥ 50%, ≥ 55%, ≥ 60%,2: 65%, ≥ 70%, ≥ 75%, ≥ 80%, ≥ 85%, ≥ 90%, ≥ 95%,≥ 96%, ≥ 97%, ≥ 98% or ≥ 99%.

In certain other embodiments, a 125 mil thick, 5 inch x 5 inch test sample of a present hollow article may exhibit a yellowness index (YI) of ≤ 0.0, ≤ -0.5, ≤ -0.7, ≤ -1.0, ≤ - 1.2, ≤ - 1.4,
≤ -1.6, ≤ -1.8, ≤ -2.0, ≤ -2.2, ≤ -2.4, ≤ -2.6, ≤ -2.7, ≤ -2.8 or ≤ -2.9.

In some embodiments, a 125 mil thick, 5 inch x 5 inch test sample of a present hollow article may exhibit a yellowness index (YI) of ≤ -3.0, ≤ -3.3, ≤ -3.5, ≤ -3.7, ≤ -3.9, ≤-4.0, ≤-4.1,
≤ -4.2, ≤ -4.3, ≤ -4.4 or ≤ -4.5.

In certain embodiments, a 125 mil thick, 5 inch x 5 inch test sample of a present hollow article may exhibit an impact strength of from ≥ 40 ft/lbs, a ductility of ≥ 90% and a YI of ≤ 0.0 or ≤ -1.0 or ≤ -1.5 or ≤ -2.0.

Mechanical properties may be determined according to the Association of Rotational Molders (ARM) Impact Test. The above embodiments referring to impact strength, ductility and color may be determined on test samples of rotomolded hollow articles wherein the peak internal air temperature is about 380°F, about 400°F or about 420°F.

Incorporation of the phosphonate ester, N-alkoxy hindered amine, melamine cyanurate (present additives) and optional further additives into the polyolefin substrate is carried out by known methods, for example before or after molding or also by applying the dissolved or dispersed additive mixture to the polyolefin, with or without subsequent evaporation of the solvent. Present additives can also be added to the polyolefin in the form of a masterbatch which contains the additives in a concentration of, for example, about 2.5% to about 40% by weight, based on the total weight of the masterbatch. In the form of a masterbatch, the polymer of the masterbatch need not be the same as the polyolefin substrate.

Molding is carried out with known mixing machines, for instance mixers, kneaders or extruders. Present additives and optional further additives can be premixed or added individually. Present additives and optional further additives can also be added before or during the polymerization or before crosslinking. Present additives and optional further additives can be incorporated into the polymer to be made flame retardant in pure form or encapsulated in waxes, oils or polymers.

Present additives and optional further additives can also be sprayed onto the polyolefin substrate. They are able to dilute other additives or their melts so that they can be sprayed also together with these additives onto the polyolefin. Addition by spraying during the deactivation of the polymerization catalysts may be advantageous, it being possible to carry out spraying using, for example, the steam used for deactivation.

In some embodiments, a present process includes the measurement of raw materials by weight followed by dry blending of the ingredients. In certain embodiments, the present additives and optional further additives are incorporated into the thermoplastic polyolefin substrate by melt blending in an extruder. The present additives and optional additives may be added together or separately. In some embodiments, the term "incorporating into a polyolefin" means melt blending, that is, subjecting a mixture to melt conditions at an elevated temperature.

A mixture may be fed to a melt mixing device such as an extruder at a constant feed rate to extrude the material into a desired form, for example pellets. The pellets are a "fully formulated polyolefin substrate". The pellets may be ground to a small, generally uniform particle size, for example to an average particle size of from about 150 microns to about 500 microns prior to rotomolding.

The fully formulated polyolefin particles are filled into one half of a mold which is then closed with the other half. Molds are typically made of aluminum or steel. The closed mold is heated and rotated around different axes, wherein molten polymer coats the interior of the mold - a process referred to as "sintering". The mold is then cooled and the molded article removed.

In addition to storage tanks, many other articles may be manufactures with a rotomolding process, for example kayaks, toys, refuse containers, equipment housings, etc. Rotomolded articles may in many cases have a relatively large average wall thickness. In some embodiments, present rotomolded articles have an average wall thickness of ≥ about 1.50 mm, ≥ about 1.75 mm, ≥ about 2.00 mm, ≥ about 2.25 mm, ≥ about 2.50 mm, ≥ about 2.75 mm, ≥ about 3.00 mm, ≥ about 3.25 mm, ≥ about 3.50 mm, ≥ about 3.75 mm, ≥ about 4.00 mm, ≥ about 4.25 mm, ≥ about 4.50 mm or ≥ about 4.75 mm. In some embodiments, rotomolded articles have an average wall thickness of from any of about 1.50 mm, about 1.75 mm, about 2.00 mm, about 2.25 mm, about 2.50 mm, about 2.75 mm or about 3.00 mm to any of about 3.25 mm, about 3.50 mm, about 3.75 mm, about 4.00 mm, about 4.25 mm, about 4.50 mm, about 4.75 mm, about 5.00 mm, about 5.25 mm, about 5.50 mm, about 5.75 mm or about 6.00 mm.

The articles "a" and "an" herein refer to one or to more than one (e.g. at least one) of the grammatical object. Any ranges cited herein are inclusive. The term "about" used throughout is used to describe and account for small fluctuations. For instance, "about" may mean the numeric value may be modified by ± 5%, ± 4%, ± 3%, ± 2%, ± 1%, ± 0.5%, ± 0.4%, ± 0.3%, ± 0.2%, ± 0.1 % or ± 0.05%. All numeric values are modified by the term "about" whether or not explicitly indicated. Numeric values modified by the term "about" include the specific identified value. For example "about 5.0" includes 5.0.

Unless otherwise indicated, all parts and percentages are by weight. Weight percent (wt%), if not otherwise indicated, is based on an entire composition free of any volatiles.

### Example 1

Additives are dry blended with low density polyethylene (LDPE, 0.935 g/cm³) to provide the formulations Additive levels are reported in ppm (parts per million) by weight, based on the weight of the polyethylene. The dry blends are melt extruded into pellets, which are ground to 35 mesh and placed in a laboratory scale FST M20 "clamshell" aluminum mold. The mold is rotated biaxially in a gas-fired oven. Hot air is circulated by blowers in the chamber while the temperature is increased to provide a peak internal air temperature (PIAT) of 400°F or 420°F. The temperature is maintained for 20 minutes. The oven is opened and is cooled over 24 minutes while still rotating. The mold is opened and the hollow article is removed.

A control formulation contains no additives. Each of formulations 1-4 contain 400 ppm of tris(3,5-di-tert-butyl-4-hydroxybenzyl) isocyanurate (phenolic antioxidant), 600 ppm of N,N-di(C₁₆-C₁₈alkyl)hydroxylamine (hydroxylamine stabilizer), 1200 ppm of tris(2,4-di-tert-butylphenyl) phosphite (organophosphorus stabilizer), 1200 ppm of oligomeric condensate of 4,4'-hexamethylenebis(amino-2,2,6,6-tetramethylpiperidine) and 2,4-dichloro-6-[(2,2,6,6-tetramethylpiperidin-4-yl)butylamino]-s-triazine end-capped with 2-chloro-4,6-bis(dibutyl-amino)-s-triazine (hindered amine light stabilizer), 400 ppm of N'-(2-ethoxyphenyl)-N-(2-ethylphenyl)oxamide (oxamide ultraviolet light absorber), 400 ppm of hydrotalcite (acid scavenger) and 200 ppm of zinc stearate (acid scavenger) Formulations 2-4 additionally contain 500 ppm of a thioether additive as outlined below. Thio1 is distearyl thiodipropionate. Thio2 is pentaerythritol tetrakis(β-laurylthiopropionate). Thio3 is distearyl disulfide. Weights of additives are ppm (parts per million) based on the weight of polyethylene.

| formulation | Thio1 | Thio2 | Thio3 |
|---|---|---|---|
| control | ---- | ---- | ---- |
| | ---- | ---- | ---- |
| 2 | 500 | ---- | ---- |
| 3 | ---- | 500 | ---- |

| formulation | Thio 1 | Thio2 | Thio3 |
|---|---|---|---|
| 4 | ---- | ---- | 500 |

Samples tested are 125 mil thick (3.175 mm) according to the Association of Rotational Molders (ARM) Impact Test. The samples are tested for impact strength, ductility and color formation. Impact strength is reported in foot/pounds (ft/lbs). Ductility is reported in percent (%). Color is reported as YI. Results for samples of hollow articles prepared with a peak internal air temperature of 400°F and of 420°F are below.

### PIAT = 400°F

| formulation | impact strength | ductility | color (YI) |
|---|---|---|---|
| control | 7.8 | 0 | -1.5 |
| 1 | 39.3 | 94 | -1.0 |
| 2 | 43.4 | 100 | -4.5 |
| 3 | 36.1 | 83 | -4.5 |
| 4 | 38.7 | 94 | -4.6 |

### PIAT = 420°F

| formulation | impact strength | ductility | color (YI) |
|---|---|---|---|
| control | 7.8 | 0 | -2.0 |
| 1 | 20.6 | 56 | 0.5 |
| 2 | 43.4 | 100 | -2.0 |
| 3 | 29.2 | 72 | -2.9 |
| 4 | 21.8 | 50 | -2.4 |

## Claims

1. A plastic article stabilized against the deleterious effects of heat, light and oxygen, comprising a polyolefin substrate and additives incorporated in the polyolefin substrate, the additives comprising
i) a hindered amine light stabilizer,
ii) an ultraviolet light absorber selected from oxamide ultraviolet light absorbers, and
iii) a thioether additive,
wherein the plastic article contains a hollow portion therein.

2. The plastic article according to claim 1, wherein the hindered amine light stabilizer is selected from the group consisting of
(1) 1-cyclohexyloxy-2,2,6,6-tetramethyl-4-octadecylaminopiperidine,
(2) bis(2,2,6,6-tetramethylpiperidin-4-yl) sebacate,
(3) bis(1-acetoxy-2,2,6,6-tetramethylpiperidin-4-yl) sebacate,
(4) bis(1,2,2,6,6-pentamethylpiperidin-4-yl) sebacate,
(5) bis(1-cyclohexyloxy-2,2,6,6-tetramethylpiperidin-4-yl) sebacate,
(6) bis(1-octyloxy-2,2,6,6-tetramethylpiperidin-4-yl) sebacate;
(7) bis(1-acyl-2,2,6,6-tetramethylpiperidin-4-yl) sebacate,
(8) bis(1,2,2,6,6-pentamethyl-4-piperidyl) n-butyl-3,5-di-tert-butyl-4-hydroxybenzylmalonate
(9) 2,4-bis[(1-cyclohexyloxy-2,2,6,6-tetramethylpiperidin-4-yl)butylamino]-6-(2-hydroxyethyl amino-s-triazine,
(10) bis(1-cyclohexyloxy-2,2,6,6-tetramethylpiperidin-4-yl) adipate,
(11) 2,4-bis[(1-cyclohexyloxy-2,2,6,6-piperidin-4-yl)butylamino]-6-chloro-s-triazine,
(12) 1-(2-hydroxy-2-methylpropoxy)-4-hydroxy-2,2,6,6-tetramethylpiperidine,
(13) 1-(2-hydroxy-2-methylpropoxy)-4-oxo-2,2,6,6-tetramethylpiperidine,
(14) 1-(2-hydroxy-2-methylpropoxy)-4-octadecanoyloxy-2,2,6,6-tetramethylpiperidine,
(15) bis(1-(2-hydroxy-2-methylpropoxy)-2,2,6,6-tetramethylpiperidin-4-yl) sebacate,
(16) bis(1-(2-hydroxy-2-methylpropoxy)-2,2,6,6-tetramethylpiperidin-4-yl) adipate,
(17) 2,4-bis{N-[1-(2-hydroxy-2-methylpropoxy)-2,2,6,6-tetramethylpiperidin-4-yl]-N-butyl-amino}-6-(2-hydroxyethylamino)-s-triazine,
(18) 4-benzoyl-2,2,6,6-tetramethylpiperidine,
(19) di-(1,2,2,6,6-pentamethylpiperidin-4-yl) p-methoxybenzylidenemalonate,
(20) 2,2,6,6-tetramethylpiperidin-4-yl octadecanoate,
(21) bis(1-octyloxy-2,2,6,6-tetramethylpiperidyl) succinate,
(22) 1,2,2,6,6-pentamethyl-4-aminopiperidine,
(23) 2-undecyl-7,7,9,9-tetramethyl-1-oxa-3,8-diaza-4-oxo-spiro[4,5]decane,
(24) tris(2,2,6,6-tetramethyl-4-piperidyl) nitrilotriacetate,
(25) tris(2-hydroxy-3-(amino-(2,2,6,6-tetramethylpiperidin-4-yl)propyl) nitrilotriacetate,
(26) tetrakis(2,2,6,6-tetramethyl-4-piperidyl)-1,2,3,4-butane-tetracarboxylate,
(27) tetrakis(1,2,2,6,6-pentamethyl-4-piperidyl)-1,2,3,4-butane-tetracarboxylate,
(28) 1,1'-(1,2-ethanediyl)-bis(3,3,5,5-tetramethylpiperazinone),
(29) 3-n-octyl-7,7,9,9-tetramethyl-1,3,8-triazaspiro[4.5]decan-2,4-dione,
(30) 8-acetyl-3-dodecyl-7,7,9,9-tetramethyl-1,3,8-triazaspiro[4.5]decane-2,4-dione,
(31) 3-dodecyl-1-(2,2,6,6-tetramethyl-4-piperidyl)pyrrolidin-2,5-dione,
(32) 3-dodecyl-1-(1,2,2,6,6-pentamethyl-4-piperidyl)pyrrolidine-2,5-dione,
(33) N,N'-bis-formyl-N,N'-bis(2,2,6,6-tetramethyl-4-piperidyl)hexamethylenediamine,
(33a) bis(1-undecanyloxy-2,2,6,6-tetramethylpiperidin-4-yl)carbonate,
(34) reaction product of 2,4-bis[(1-cyclohexyloxy-2,2,6,6-piperidin-4-yl)butylamino]-6-chloro-s-triazine with N,N'-bis(3-aminopropyl)ethylenediamine),
(35) condensate of 1-(2-hydroxyethyl)-2,2,6,6-tetramethyl-4-hydroxypiperidine and succinic acid,
(36) condensate of N,N'-bis(2,2,6,6-tetramethyl-4-piperidyl)-hexamethylenediamine and 4-tert-octylamino-2,6-dichloro-1,3,5-triazine,
(37) condensate of N,N'-bis(2,2,6,6-tetramethyl-4-piperidyl)-hexamethylenediamine and 4-cyclohexylamino-2,6-dichloro-1,3,5-triazine,
(38) condensate of N,N'-bis-(2,2,6,6-tetramethyl-4-piperidyl)hexamethylenediamine and 4-morpholino-2,6-dichloro-1,3,5-triazine,
(39) condensate of N,N'-bis-(1,2,2,6,6-pentamethyl-4-piperidyl)hexamethylenediamine and 4-morpholino-2,6-dichloro-1,3,5-triazine,
(40) condensate of 2-chloro-4,6-bis(4-n-butylamino-2,2,6,6-tetramethylpiperidyl)-1,3,5-triazine and 1,2-bis(3-aminopropylamino)ethane,
(41) condensate of 2-chloro-4,6-di-(4-n-butylamino-1,2,2,6,6-pentamethylpiperidyl)-1,3,5-triazine and 1,2-bis-(3-aminopropylamino)ethane,
(42) a reaction product of 7,7,9,9-tetramethyl-2-cycloundecyl-1-oxa-3,8-diaza-4-oxospiro [4,5]decane and epichlorohydrin,
(43) poly[methyl,(3-oxy-(2,2,6,6-tetramethylpiperidin-4-yl)propyl)] siloxane, CAS#182635-99-0,
(44) reaction product of maleic acid anhydride-C₁₈-C₂₂-α-olefin-copolymer with 2,2,6,6-tetramethyl-4-aminopiperidine,
(45) oligomeric condensate of 4,4'-hexamethylenebis(amino-2,2,6,6-tetramethylpiperidine) and 2,4-dichloro-6-[(2,2,6,6-tetramethylpiperidin-4-yl)butylamino]-s-triazine end-capped with 2-chloro-4,6-bis(dibutylamino)-s-triazine,
(46) oligomeric condensate of 4,4'-hexamethylenebis(amino-1,2,2,6,6-pentaamethyl-piperidine) and 2,4-dichloro-6-[(1,2,2,6,6-pentaamethylpiperidin-4-yl)butylamino]-s-triazine end-capped with 2-chloro-4,6-bis(dibutylamino)-s-triazine,
(47) oligomeric condensate of 4,4'-hexamethylenebis(amino-1-propoxy-2,2,6,6-tetramethyl piperidine) and 2,4-dichloro-6-[(1-propoxy-2,2,6,6-tetramethylpiperidin-4-yl)butylamino]-s-triazine end-capped with 2-chloro-4,6-bis(dibutylamino)-s-triazine,
(48) oligomeric condensate of 4,4'-hexamethylenebis(amino-1-acyloxy-2,2,6,6-tetramethyl piperidine) and 2,4-dichloro-6-[(1-acyloxy-2,2,6,6-tetramethylpiperidin-4-yl)butylamino]-s-triazine end-capped with 2-chloro-4,6-bis(dibutylamino)-s-triazine and
(49) product obtained by reacting (a) with (b) where (a) is product obtained by reacting 1,2-bis(3-aminopropylamino)ethane with cyanuric chloride and (b) is (2,2,6,6-tetramethyl piperidin-4-yl)butylamine.

3. The plastic article according to any of the preceding claims, wherein the thioether additives comprise mercaptan-containing compounds containing one or more moieties of formula

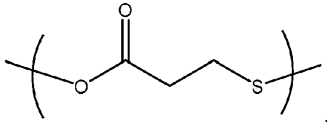

4. The plastic article according to any of the preceding claims, wherein the thioether additives comprise mercaptan-containing compounds containing one or more moieties of formula 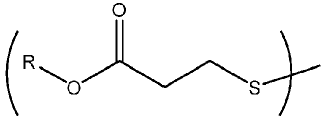 or 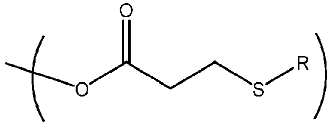 wherein R is a hydrocarbyl group.

5. The plastic article according to any of the preceding claims, wherein thioether additives are of formula 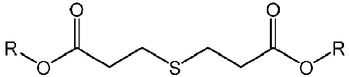 or 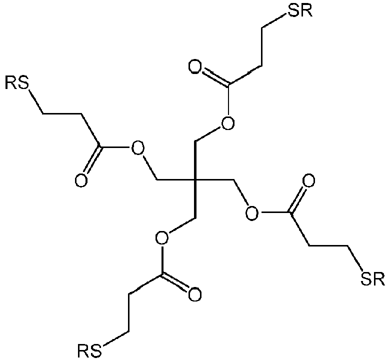 wherein each R is independently a hydrocarbyl group.

6. The plastic article according to any of the preceding claims, wherein the thioether additives comprise disulfide-containing compounds of formula R-S-S-R, wherein each R is independently a hydrocarbyl group.

7. The plastic article according to any of the preceding claims, wherein the polyolefin substrate comprises polyethylene.

8. The plastic article according to any of the preceding claims, wherein the article comprises from about 50 wt% to about 95 wt% polyolefin, based on the total weight of the article.

9. The plastic article according to any of the preceding claims, wherein the article comprises from about 50 ppm to about 2000 ppm of the hindered amine light stabilizer, by weight, based on the total weight of the article.

10. The plastic article according to any of the preceding claims, wherein the article comprises from about 50 ppm to about 2000 ppm of the ultraviolet light absorber, by weight, based on the total weight of the article.

11. The plastic article according to any of the preceding claims, wherein the article comprises from about 50 ppm to about 2000 ppm of the thioether additive, by weight, based on the total weight of the article.

12. The plastic article according to any of the preceding claims, wherein a weight/weight ratio of the hindered amine light stabilizer to the thioether additive is from about 7/1 to about 1/1.

13. The plastic article according to any of the preceding claims, wherein a weight/weight ratio of the ultraviolet light absorber to the thioether additive is from about 3/1 to about 1/3.

14. The plastic article according to any of the preceding claims, wherein the article further comprises one or more additives selected from a group consisting of phenolic antioxidants, hydroxylamine stabilizers, organophosphorus stabilizers and acid scavengers.

15. The plastic article according to any of the preceding claims, wherein the article comprises from about 0.1 wt% to about 50 wt% of one or more fillers, based on the total weight of the article.

16. The plastic article according to any of the preceding claims, wherein the article has an average wall thickness of from about 1.50 mm to about 6.00 mm.

17. The plastic article according to any of the preceding claims, wherein a 125 mil thick, 5 inch x 5 inch test sample of the article exhibits an impact strength of ≥ 21 ft/lbs.

18. The plastic article according to any of the preceding claims, wherein a 125 mil thick, 5 inch x 5 inch test sample of the article exhibits ductility of ≥ 50%.

19. The plastic article according to any of the preceding claims, wherein a 125 mil thick, 5 inch x 5 inch test sample of the article exhibits a yellowness index (YI) of ≤ -2.0.

20. A process for the production of a hollow plastic article, the process comprising
incorporating into a polyolefin substrate additives comprising i) a hindered amine light stabilizer, ii) an ultraviolet light absorber selected from oxamide ultraviolet light absorbers, and iii) a thioether additive, to provide a fully formulated polyolefin mixture,
adding the mixture to a mold, heating the mold to a temperature of greater than 280°C, rotating the mold about at least 2 axes, wherein molten polyolefin mixture coats the interior of the mold, cooling the mold while still rotating, opening the mold and removing the formed hollow article.

## Patentansprüche

1. Kunststofferzeugnis, das gegen die schädlichen Wirkungen von Hitze, Licht und Sauerstoff stabilisiert ist, das ein Polyolefinsubstrat und Zusätze umfasst, die in das Polyolefinsubstrat eingearbeitet sind, wobei die Zusätze Folgendes umfassen
i) einen Lichtstabilisator auf Basis eines sterisch gehinderten Amins,
ii) einen Ultraviolettlichtabsorber, der aus Oxamid-Ultraviolettlichtabsorbern ausgewählt ist, und
iii) einen Thioetherzusatz,
wobei das Kunststofferzeugnis einen hohlen Abschnitt darin enthält.

2. Kunststofferzeugnis nach Anspruch 1, wobei der Lichtstabilisator auf Basis des sterisch gehinderten Amins aus der Gruppe ausgewählt ist, die aus Folgendem besteht
(1) 1-Cyclohexyloxy-2,2,6,6-tetramethyl-4-octadecylaminopiperidin,
(2) Bis(2,2,6,6-tetramethylpiperidin-4-yl)sebacat,
(3) Bis(1-acetoxy-2,2,6,6-tetramethylpiperidin-4-yl)sebacat,
(4) Bis(1,2,2,6,6-pentamethylpiperidin-4-yl)sebacat,
(5) Bis(1-cyclohexyloxy-2,2,6,6-tetramethylpiperidin-4-yl)sebacat,
(6) Bis(1-octyloxy-2,2,6,6-tetramethylpiperidin-4-yl)sebacat;
(7) Bis(1-acyl-2,2,6,6-tetramethylpiperidin-4-yl)sebacat,
(8) Bis(1,2,2,6,6-pentamethyl-4-piperidyl)n-butyl-3,5-di-tert-butyl-4-hydroxybenzylmalonat,
(9) 2,4-Bis[(1-cyclohexyloxy-2,2,6,6-tetramethylpiperidin-4-yl)butylamino]-6-(2-hydroxyethylamino-s-triazin,
(10) Bis(1-cyclohexyloxy-2,2,6,6-tetramethylpiperidin-4-yl)adipat,
(11) 2,4-Bis[(1-cyclohexyloxy-2,2,6,6-piperidin-4-yl)butylamino]-6-chlor-s-triazin,
(12) 1-(2-Hydroxy-2-methylpropoxy)-4-hydroxy-2,2,6,6-tetramethylpiperidin,
(13) 1-(2-Hydroxy-2-methylpropoxy)-4-oxo-2,2,6,6-tetramethylpiperidin,
(14) 1-(2-Hydroxy-2-methylpropoxy)-4-octadecanoyloxy-2,2,6,6-tetramethylpiperidin,
(15) Bis(1-(2-hydroxy-2-methylpropoxy)-2,2,6,6-tetramethylpiperidin-4-yl)sebacat,
(16) Bis(1-(2-hydroxy-2-methylpropoxy)-2,2,6,6-tetramethylpiperidin-4-yl)adipat,
(17) 2,4-Bis{N-[1-(2-hydroxy-2-methy!propoxy)-2,2,6,6-tetramethylpiperidin-4-yl]-N-butyl-amino}-6-(2-hydroxyethylamino)-s-triazin,
(18) 4-Benzoyl-2,2,6,6-tetramethylpiperidin,
(19) Di-(1,2,2,6,6-pentamethylpiperidin-4-yl)-p-methoxybenzylidenmalonat,
(20) 2,2,6,6-Tetramethylpiperidin-4-yl-octadecanoat,
(21) Bis(1-octyloxy-2,2,6,6-tetramethylpiperidyl)succinat,
(22) 1,2,2,6,6-Pentamethyl-4-aminopiperidin,
(23) 2-Undecyl-7,7,9,9-tetramethyl-1-oxa-3,8-diaza-4-oxo-spiro[4,5]decan,
(24) Tris(2,2,6,6-tetramethyl-4-piperidyl)nitrilotriacetat,
(25) Tris(2-hydroxy-3-(amino-(2,2,6,6-tetramethylpiperidin-4-yl)propyl)nitrilotriacetat,
(26) Tetrakis(2,2,6,6-tetramethyl-4-piperidyl)-1,2,3,4-butan-tetracarboxylat,
(27) Tetrakis(1,2,2,6,6-pentamethyl-4-piperidyl)-1,2,3,4-butan-tetracarboxylat,
(28) 1,1'-(1,2-Ethandiyl)-bis(3,3,5,5-tetramethylpiperazinon),
(29) 3-n-Octyl-7,7,9,9-tetramethyl-1,3,8-triazaspiro[4.5]decan-2,4-dion,
(30) 8-Acetyl-3-dodecyl-7,7,9,9-tetramethyl-1,3,8-triazaspiro[4.5]decan-2,4-dion,
(31) 3-Dodecyl-1-(2,2,6,6-tetramethyl-4-piperidyl)pyrrolidin-2,5-dion,
(32) 3-Dodecyl-1-(1,2,2,6,6-pentamethyl-4-piperidyl)pyrrolidin-2,5-dion,
(33) N,N'-bis-formyl-N,N'-bis(2,2,6,6-tetramethyl-4-piperidyl)hexamethylendiamin,
(33a) Bis(1-undecanyloxy-2,2,6,6-tetramethylpiperidin-4-yl)carbonat,
(34) Reaktionsprodukt aus 2,4-Bis[(1-cyclohexyloxy-2,2,6,6-piperidin-4-yl)butylamino]-6-chlors-triazin mit N,N'-bis(3-aminopropyl)ethylendiamin),
(35) Kondensat aus 1-(2-Hydroxyethyl)-2,2,6,6-tetramethyl-4-hydroxypiperidin und Bernsteinsäure,
(36) Kondensat aus N,N'-Bis(2,2,6,6-tetramethyl-4-piperidyl)-hexamethylendiamin und 4-tert-Octylamino-2,6-dichlor-1,3,5-triazin,
(37) Kondensat aus N,N'-Bis(2,2,6,6-tetramethyl-4-piperidyl)-hexamethylendiamin und 4-Cyclohexylamino-2,6-dichlor-1,3,5-triazin,
(38) Kondensat aus N,N'-Bis-(2,2,6,6-tetramethyl-4-piperidyl)hexamethylendiamin und 4-Morpholino-2,6-dichlor-1,3,5-triazin,
(39) Kondensat aus N,N'-Bis-(1,2,2,6,6-pentamethyl-4-piperidyl)hexamethylendiamin und 4-Morpholino-2,6-dichlor-1,3,5-triazin,
(40) Kondensat aus 2-Chlor-4,6-bis(4-n-butylamino-2,2,6,6-tetramethylpiperidyl)-1,3,5-triazin und 1,2-Bis(3-aminopropylamino)ethan,
(41) Kondensat aus 2-Chlor-4,6-di-(4-n-butylamino-1,2,2,6,6-pentamethylpiperidyl)-1,3,5-triazin und 1,2-Bis-(3-aminopropylamino)ethan,
(42) ein Reaktionsprodukt aus 7,7,9,9-Tetramethyl-2-cycloundecyl-1-oxa-3,8-diaza-4-oxospiro[4,5]decan und Epichlorhydrin,
(43) Poly[methyl, (3-oxy-(2,2,6,6-tetramethylpiperidin-4-yl)propyl)]siloxan, CAS#182635-99-0,
(44) Reaktionsprodukt aus Maleinsäureanhydrid-C₁₈-C₂₂-α-olefin-copolymer mit 2,2,6,6-Tetramethyl-4-aminopiperidin,
(45) oligomeres Kondensat aus 4,4'-Hexamethylenbis(amino-2,2,6,6-tetramethylpiperidin) und 2,4-Dichlor-6-[(2,2,6,6-tetramethylpiperidin-4-yl)butylamino]-s-triazin, dessen Endgruppen mit 2-Chlor-4,6-bis(dibutylamino)-s-triazin verschlossen sind,
(46) oligomeres Kondensat aus 4,4'-Hexamethylenbis(amino-1,2,2,6,6-pentaamethyl-piperidin) und 2,4-Dichlor-6-[(1,2,2,6,6-pentaamethylpiperidin-4-yl)butylamino]-s-triazin, dessen Endgruppen mit 2-Chlor-4,6-bis(dibutylamino)-s-triazin verschlossen sind,
(47) oligomeres Kondensat aus 4,4'-Hexamethylenbis(amino-1-propoxy-2,2,6,6-tetramethylpiperidin) und 2,4-Dichlor-6-[(1-propoxy-2,2,6,6-tetramethylpiperidin-4-yl)butylamino]-s-triazin, dessen Endgruppen mit 2-Chlor-4,6-bis(dibutylamino)-s-triazin verschlossen sind,
(48) oligomeres Kondensat aus 4,4'-Hexamethylenbis(amino-1-acyloxy-2,2,6,6-tetramethylpiperidin) und 2,4-Dichlor-6-[(1-acyloxy-2,2,6,6-tetramethylpiperidin-4-yl)butylamino]-s-triazin, dessen Endgruppen mit 2-Chlor-4,6-bis(dibutylamino)-s-triazin verschlossen sind und
(49) Produkt, das durch Reagieren von (a) mit (b) erhalten wird, wobei (a) ein Produkt ist, das durch Reagieren von 1,2-Bis(3-aminopropylamino)ethan mit Cyanurchlorid erhalten wird, und (b) (2,2,6,6-Tetramethylpiperidin-4-yl)butylamin ist.

3. Kunststofferzeugnis nach einem der vorhergehenden Ansprüche, wobei die Thioetherzusätze Mercaptanenthaltende Verbindungen umfassen, die eine oder mehrere Molekülteile der folgenden Formel enthalten

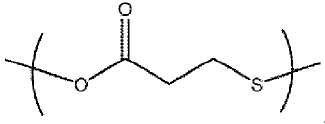

4. Kunststofferzeugnis nach einem der vorhergehenden Ansprüche, wobei die Thioetherzusätze Mercaptanenthaltende Verbindungen umfassen, die eine oder mehrere Molekülteile der folgenden Formel enthalten 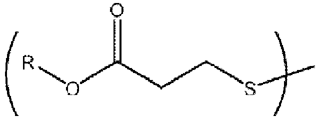 oder 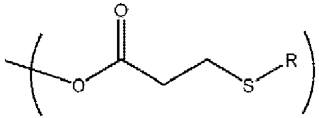 wobei R eine Hydrocarbylgruppe ist.

5. Kunststofferzeugnis nach einem der vorhergehenden Ansprüche, wobei Thioetherzusätze die folgende Formel haben 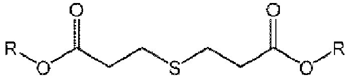 oder 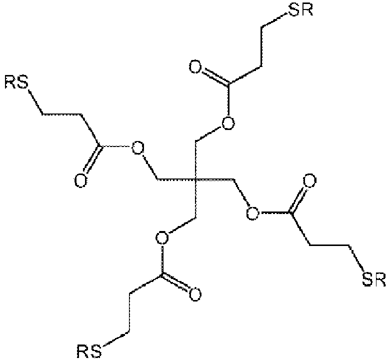 wobei jedes R unabhängig eine Hydrocarbylgruppe ist.

6. Kunststofferzeugnis nach einem der vorhergehenden Ansprüche, wobei die Thioetherzusätze Disulfidenthaltende Verbindungen der Formel R-S-S-R umfassen, wobei jedes R unabhängig eine Hydrocarbylgruppe ist.

7. Kunststofferzeugnis nach einem der vorhergehenden Ansprüche, wobei das Polyolefinsubstrat Polyethylen umfasst.

8. Kunststofferzeugnis nach einem der vorhergehenden Ansprüche, wobei das Erzeugnis etwa 50 Gew.-% bis etwa 95 Gew.-% Polyolefin basierend auf dem Gesamtgewicht des Erzeugnisses umfasst.

9. Kunststofferzeugnis nach einem der vorhergehenden Ansprüche, wobei das Erzeugnis etwa 50 ppm bis etwa 2000 ppm des Lichtstabilisators auf Basis des sterisch gehinderten Amins, in Gew.-%, basierend auf dem Gesamtgewicht des Erzeugnisses umfasst.

10. Kunststofferzeugnis nach einem der vorhergehenden Ansprüche, wobei das Erzeugnis etwa 50 ppm bis etwa 2000 ppm des Ultraviolettlichtabsorbers, in Gew.-%, basierend auf dem Gesamtgewicht des Erzeugnisses umfasst.

11. Kunststofferzeugnis nach einem der vorhergehenden Ansprüche, wobei das Erzeugnis etwa 50 ppm bis etwa 2000 ppm des Thioetherzusatzes, in Gew.-%, basierend auf dem Gesamtgewicht des Erzeugnisses umfasst.

12. Kunststofferzeugnis nach einem der vorhergehenden Ansprüche, wobei ein Gewicht/Gewichtsverhältnis des Lichtstabilisators auf Basis des sterisch gehinderten Amins zu dem Thioetherzusatz etwa 7/1 bis etwa 1/1 beträgt.

13. Kunststofferzeugnis nach einem der vorhergehenden Ansprüche, wobei ein Gewicht/Gewichtsverhältnis des Ultraviolettlichtabsorbers zu dem Thioetherzusatz etwa 3/1 bis etwa 1/3 beträgt.

14. Kunststofferzeugnis nach einem der vorhergehenden Ansprüche, wobei das Erzeugnis ferner einen oder mehrere Zusätze umfasst, die aus einer Gruppe ausgewählt sind, die aus phenolischen Antioxidantien, Hydroxylaminstabilisatoren, Organophosphorstabilisatoren und Säurefängern besteht.

15. Kunststofferzeugnis nach einem der vorhergehenden Ansprüche, wobei das Erzeugnis etwa 0,1 Gew.-% bis etwa 50 Gew.-% eines oder mehrerer Füllstoffe basierend auf dem Gesamtgewicht des Erzeugnisses umfasst.

16. Kunststofferzeugnis nach einem der vorhergehenden Ansprüche, wobei das Erzeugnis eine durchschnittliche Wanddicke von etwa 1,50 mm bis etwa 6,00 mm aufweist.

17. Kunststofferzeugnis nach einem der vorhergehenden Ansprüche, wobei eine 125 mil dicke, 5 Zoll x 5 Zoll Testprobe des Erzeugnisses eine Schlagfestigkeit von ≥ 21 ft/lbs vorweist.

18. Kunststofferzeugnis nach einem der vorhergehenden Ansprüche, wobei eine 125 mil dicke, 5 Zoll x 5 Zoll Testprobe des Erzeugnisses eine Duktilität von ≥ 50 % vorweist.

19. Kunststofferzeugnis nach einem der vorhergehenden Ansprüche, wobei eine 125 mil dicke, 5 Zoll x 5 Zoll Testprobe des Erzeugnisses eine Vergilbung (yellowness index - YI) von ≤ -2,0 vorweist.

20. Verfahren für die Produktion eines hohlen Kunststofferzeugnisses, wobei das Verfahren Folgendes umfasst
Einarbeiten von Zusätzen, die i) einen Lichtstabilisator auf Basis eines sterisch gehinderten Amins, ii) einen Ultraviolettlichtabsorber, der aus Oxamid-Ultraviolettlichtabsorbern ausgewählt ist, und iiii) einen Thioetherzusatz umfassen, in ein Polyolefinsubstrat, um eine vollständig formulierte Polyolefinmischung bereitzustellen,
Zusetzen der Mischung zu einer Form, Erhitzen der Form auf eine Temperatur über 280 °C, Drehen der Form um wenigstens 2 Achsen herum, wobei die geschmolzene Polyolefinmischung das Innere der Form bedeckt, Abkühlen der Form, während sie sich noch dreht, Öffnen der Form und Entfernen des ausgebildeten hohlen Erzeugnisses.

## Revendications

1. Article en plastique stabilisé contre les effets néfastes de la chaleur, de la lumière et de l'oxygène, comprenant un substrat en polyoléfine et des additifs incorporés dans le substrat en polyoléfine, les additifs comprenant
i) un photostabilisant à amine encombrée,
ii) un absorbeur de lumière ultraviolette choisi parmi des absorbeurs de lumière ultraviolette de type oxamide, et
iii) un additif thioéther,
l'article en plastique contenant une partie creuse à l'intérieur de celui-ci.

2. Article en matière plastique selon la revendication 1, dans lequel le photostabilisant à amine encombrée est choisi dans le groupe constitué de
(1) 1-cyclohexyloxy-2,2,6,6-tétraméthyl-4-octadécylaminopipéridine,
(2) sébacate de bis(2,2,6,6-tétraméthylpipéridin-4-yle),
(3) sébacate de bis(1-acétoxy-2,2,6,6-tétraméthylpipéridin-4-yle),
(4) sébacate de bis(1,2,2,6,6-pentaméthylpipéridin-4-yle),
(5) sébacate de bis(1-cyclohexyloxy-2,2,6,6-tétraméthylpipéridin-4-yle),
(6) sébacate de bis(1-octyloxy-2,2,6,6-tétraméthylpipéridin-4-yle) ;
(7) sébacate de bis(1-acyl-2,2,6,6-tétraméthylpipéridin-4-yle),
(8) bis(1,2,2,6,6-pentaméthyl-4-pipéridyle) n-butyl-3,5-di-tert-butyl-4-hydroxybenzylmalonate
(9) 2,4-bis[(1-cyclohexyloxy-2,2,6,6-tétraméthylpipéridin-4-yl)butylamino]-6-(2-hydroxyéthylamino-s-triazine,
(10) adipate de bis(1-cyclohexyloxy-2,2,6,6-tétraméthylpipéridin-4-yle),
(11) 2,4-bis[(1-cyclohexyloxy-2,2,6,6-pipéridin-4-yl)butylamino]-6-chloro-s-triazine,
(12) 1-(2-hydroxy-2-méthylpropoxy)-4-hydroxy-2,2,6,6-tétraméthylpipéridine,
(13) 1-(2-hydroxy-2-méthylpropoxy)-4-oxo-2,2,6,6-tétraméthylpipéridine,
(14) 1-(2-hydroxy-2-méthylpropoxy)-4-octadécanoyloxy-2,2,6,6-tétraméthylpipéridine,
(15) sébacate de bis(1-(2-hydroxy-2-méthylpropoxy)-2,2,6,6-tétraméthylpipéridin-4-yle),
(16) adipate de bis(1-(2-hydroxy-2-méthylpropoxy)-2,2,6,6-tétraméthylpipéridin-4-yle),
(17) 2,4-bis{N-[1-(2-hydroxy-2-méthylpropoxy)-2,2,6,6-tétraméthylpipéridin-4-yl]-N-butyl-amino}-6-(2-hydroxyéthylamino)-s-triazine,
(18) 4-benzoyl-2,2,6,6-tétraméthylpipéridine,
(19) p-méthoxybenzylidènemalonate de di-(1,2,2,6,6-pentaméthylpipéridin-4-yle),
(20) octadécanoate de 2,2,6,6-tétraméthylpipéridin-4-yle,
(21) succinate de bis(1-octyloxy-2,2,6,6-tétraméthylpipéridyle),
(22) 1,2,2,6,6-pentaméthyl-4-aminopipéridine,
(23) 2-undécyl-7,7,9,9-tétraméthyl-1-oxa-3,8-diaza-4-oxo-spiro[4,5]décane,
(24) nitrilotriacétate de tris(2,2,6,6-tétraméthyl-4-pipéridyle),
(25) nitrilotriacétate de tris(2-hydroxy-3-(amino-(2,2,6,6-tétraméthylpipéridin-4-yl)propyl),
(26) tétrakis(2,2,6,6-tétraméthyl-4-pipéridyl)-1,2,3,4-butane-tétracarboxylate,
(27) tétrakis(1,2,2,6,6-pentaméthyl-4-pipéridyl)-1,2,3,4-butane-tétracarboxylate,
(28) 1,1'-(1,2-éthanediyl)-bis(3,3,5,5-tétraméthylpipérazinone),
(29) 3-n-octyl-7,7,9,9-tétraméthyl-1,3,8-triazaspiro[4.5]décan-2,4-dione,
(30) 8-acétyl-3-dodécyl-7,7,9,9-tétraméthyl-1,3,8-triazaspiro[4.5]décane-2,4-dione,
(31) 3-dodécyl-1-(2,2,6,6-tétraméthyl-4-pipéridyl)pyrrolidin-2,5-dione,
(32) 3-dodécyl-1-(1,2,2,6,6-pentaméthyl-4-pipéridyl)pyrrolidine-2,5-dione,
(33) N,N'-bis-formyl-N,N'-bis(2,2,6,6-tétraméthyl-4-pipéridyl)hexaméthylènediamine,
(33a) carbonate de bis(1-undécanyloxy-2,2,6,6-tétraméthylpipéridin-4-yle),
(34) produit de réaction de 2,4-bis[(1-cyclohexyloxy-2,2,6,6-pipéridin-4-yl)butylamino]-6-chloro-s-triazine avec la N,N'-bis(3-aminopropyl)éthylènediamine),
(35) condensat de 1-(2-hydroxyéthyl)-2,2,6,6-tétraméthyl-4-hydroxypipéridine et d'acide succinique,
(36) condensat de N,N'-bis(2,2,6,6-tétraméthyl-4-pipéridyl)-hexaméthylènediamine et de 4-tert-octylamino-2,6-dichloro-1,3,5-triazine,
(37) condensat de N,N'-bis(2,2,6,6-tétraméthyl-4-pipéridyl)-hexaméthylènediamine et de 4-cyclohexylamino-2,6-dichloro-1,3,5-triazine,
(38) condensat de N,N'-bis-(2,2,6,6-tétraméthyl-4-pipéridyl)hexaméthylènediamine et de 4-morpholino-2,6-dichloro-1,3,5-triazine,
(39) condensat de N,N'-bis-(1,2,2,6,6-pentaméthyl-4-pipéridyl)hexaméthylènediamine et de 4-morpholino-2,6-dichloro-1,3,5-triazine,
(40) condensat de 2-chloro-4,6-bis(4-n-butylamino-2,2,6,6-tétraméthylpipéridyl)-1,3,5-triazine et de 1,2-bis(3-aminopropylamino)éthane,
(41) condensat de 2-chloro-4,6-di-(4-n-butylamino-1,2,2,6,6-pentaméthylpipéridyl)-1,3,5-triazine et 1,2-bis-(3-aminopropylamino)éthane,
(42) un produit de réaction de 7,7,9,9-tétraméthyl-2-cycloundécyl-1-oxa-3,8-diaza-4-oxospiro[4,5]décane et d'épichlorhydrine,
(43) siloxane de poly[méthyl, (3-oxy-(2,2,6,6-tétraméthylpipéridin-4-yl)propyl)], CAS#182635-99-0,
(44) produit de réaction d'anhydride d'acide maléique-copolymère d'a-oléfine en C₁₈-C₂₂ avec 2,2,6,6-tétraméthyl-4-aminopipéridine,
(45) condensat oligomère de 4,4'-hexaméthylènebis(amino-2,2,6,6-tétraméthylpipéridine) et de 2,4-dichloro-6-[(2,2,6,6-tétraméthylpipéridin-4-yl)butylamino]-s-triazine coiffée aux extrémités avec 2-chloro-4,6-bis(dibutylamino)-s-triazine,
(46) condensat oligomère de 4,4'-hexaméthylènebis(amino-1,2,2,6,6-pentaaméthylpipéridine) et de 2,4-dichloro-6-[(1,2,2,6,6-pentaaméthylpipéridine-4-yl)butylamino]-s-triazine coiffée par la 2-chloro-4,6-bis(dibutylamino)-s-triazine,
(47) condensat oligomère de 4,4'-hexaméthylènebis(amino-1-propoxy-2,2,6,6-tétraméthylpipéridine) et de 2,4-dichloro-6-[(1-propoxy-2,2,6,6-tétraméthylpipéridin-4-yl)butylamino]-s-triazine coiffée par la 2-chloro-4,6-bis(dibutylamino)-s-triazine,
(48) condensat oligomère de 4,4'-hexaméthylènebis(amino-1-acyloxy-2,2,6,6-tétraméthylpipéridine) et de 2,4-dichloro-6-[(1-acyloxy-2,2,6,6-tétraméthylpipéridin-4-yl)butylamino]-s-triazine coiffée par la 2-chloro-4,6-bis(dibutylamino)-s-triazine et
(49) produit obtenu en faisant réagir (a) avec (b), (a) étant le produit obtenu en faisant réagir 1,2-bis(3-aminopropylamino)éthane avec du chlorure cyanurique et (b) étant (2,2,6,6-tétraméthylpipéridine-4-yl)butylamine.

3. Article en plastique selon l'une quelconque des revendications précédentes, dans lequel les additifs thioéther comprennent des composés contenant des mercaptans contenant un ou plusieurs fragments de formule

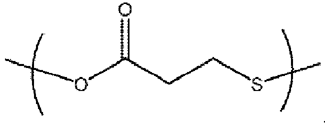

4. Article en plastique selon l'une quelconque des revendications précédentes, dans lequel les additifs thioéther comprennent des composés contenant des mercaptans contenant un ou plusieurs fragments de formule 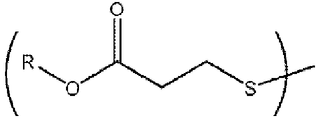 ou 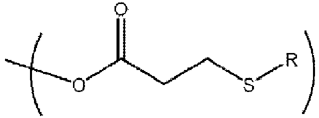 R étant un groupe hydrocarbyle.

5. Article en plastique selon l'une quelconque des revendications précédentes, dans lequel les additifs thioéther sont de formule 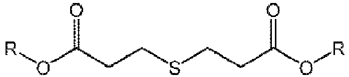 ou 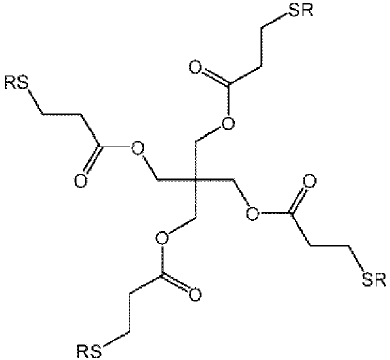 chaque R étant indépendamment un groupe hydrocarbyle.

6. Article en plastique selon l'une quelconque des revendications précédentes, dans lequel les additifs thioéther comprennent des composés contenant des disulfures de formule RSSR, chaque R étant indépendamment un groupe hydrocarbyle.

7. Article en plastique selon l'une quelconque des revendications précédentes, dans lequel le substrat de polyoléfine comprend du polyéthylène.

8. Article en plastique selon l'une quelconque des revendications précédentes, dans lequel l'article comprend environ 50 % en poids à environ 95 % en poids de polyoléfine, sur la base du poids total de l'article.

9. Article en plastique selon l'une quelconque des revendications précédentes, dans lequel l'article comprend environ 50 ppm à environ 2 000 ppm de photostabilisant à amine encombrée, en poids, sur la base du poids total de l'article.

10. Article en plastique selon l'une quelconque des revendications précédentes, dans lequel l'article comprend environ 50 ppm à environ 2000 ppm de l'absorbeur de lumière ultraviolette, en poids, sur la base du poids total de l'article.

11. Article en plastique selon l'une quelconque des revendications précédentes, dans lequel l'article comprend environ 50 ppm à environ 2000 ppm de l'additif thioéther, en poids, sur la base du poids total de l'article.

12. Article en plastique selon l'une quelconque des revendications précédentes, dans lequel un rapport poids/poids du photostabilisant à amine encombrée à l'additif thioéther est d'environ 7/1 à environ 1/1.

13. Article en plastique selon l'une quelconque des revendications précédentes, dans lequel un rapport poids/poids de l'absorbeur de lumière ultraviolette à l'additif thioéther est d'environ 3/1 à environ 1/3.

14. Article en plastique selon l'une quelconque des revendications précédentes, dans lequel l'article comprend en outre un ou plusieurs additifs choisis dans un groupe constitué d'antioxydants phénoliques, de stabilisants d'hydroxylamine, de stabilisants organophosphorés et de piégeurs d'acide.

15. Article en plastique selon l'une quelconque des revendications précédentes, dans lequel l'article comprend d'environ 0,1 % en poids à environ 50 % en poids d'une ou plusieurs charges, sur la base du poids total de l'article.

16. Article en plastique selon l'une quelconque des revendications précédentes, dans lequel l'article a une épaisseur de paroi moyenne d'environ 1,50 mm à environ 6,00 mm.

17. Article en plastique selon l'une quelconque des revendications précédentes, dans lequel un échantillon d'essai de 125 mil d'épaisseur, 5 pouces x 5 pouces de l'article présente une résistance aux chocs ≥ 21 pieds/livres.

18. Article en plastique selon l'une quelconque des revendications précédentes, dans lequel un échantillon d'essai de 125 mil d'épaisseur, 5 pouces x 5 pouces de l'article présente une ductilité ≥ 50 %.

19. Article en plastique selon l'une quelconque des revendications précédentes, dans lequel un échantillon d'essai de 125 mil d'épaisseur, 5 pouces x 5 pouces de l'article présente un indice de jaunissement (YI) de ≤ -2.0.

20. Procédé de production d'un article creux en plastique, le procédé comprenant
l'incorporation dans un substrat de polyoléfine d'additifs comprenant i) un photostabilisant à amine encombrée, ii) un absorbeur de lumière ultraviolette choisi parmi des absorbeurs de lumière ultraviolette de type oxamide, et iii) un additif thioéther, pour fournir un mélange de polyoléfine entièrement formulé,
l'ajout du mélange dans un moule, le chauffage du moule à une température supérieure à 280 °C, la rotation du moule autour d'au moins 2 axes, le mélange de polyoléfine fondu recouvrant l'intérieur du moule, le refroidissement du moule tout en continuant à tourner, l'ouverture du moule et le retrait de l'article creux formé.
